# EUROPEAN PATENT APPLICATION

(11) **EP 4 286 640 A2**
(43) Date of publication of application: **06.12.2023**
(21) Application number: 23204340.6
(22) Date of filing: 22.11.2019
(51) Int. Cl.: E06B 3/663

(54) **METHODS FOR FORMING ASYMMETRIC GLASS LAMINATES USING SEPARATION POWDER AND LAMINATES MADE THEREFORM**

(30) Priority: 30.11.2018 US 201862773746 P
(62) Divisional of application: 19823840.4
(71) Applicant: Corning Incorporated, Corning, New York 14831 (US)
(72) Inventor: EL FAIZ, Mohcine, 9200 Nanterre (FR); GIRARD, Vincent, 77300 Fontainebleau (FR); ALLAM, Zakaria, 77210 Avon (FR)
(74) Representative: Epping - Hermann - Fischer

(57) **Abstract**

Embodiments of a laminate and methods of forming a laminate using a separation media are providing. The method includes providing a first glass substrate, disposing separation media on top of the first glass substrate on the second major surface, the separation media being disposed in a predetermined pattern; providing a second glass substrate and forming a stack with the first and second glass substrates and the separation media disposed therebetween; and heating the stack to form a co-shaped stack having a first curved glass substrate and a second curved glass substrate. The predetermined pattern has a first region of separation media and a second region of separation media that is closer to an edge of the second major surface, where a thickness of the second region is greater than a first thickness of the first region.

## Description

### CROSS-REFERENCE TO RELATED APPLICATIONS

This application claims the benefit of priority under 35 U.S.C. § 119 of U.S. Provisional Application Serial No. 62/773,746 filed on November 30, 2018 the content of which is relied upon and incorporated herein by reference in its entirety.

### BACKGROUND

The disclosure relates to shaped glass laminates and methods for forming such laminates, and more particularly to shaped glass laminates including glass substrates that differ from one another and are co-sagged using a separation powder that exhibits minimal shape bending dot deformation.

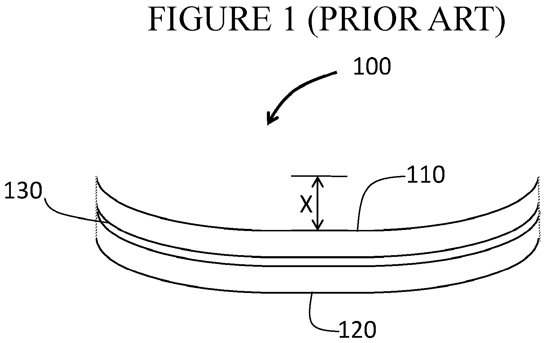

A typical glass laminate is shown in Figure 1 and includes a first curved glass substrate 110, a second curved glass substrate 120, and an intervening interlayer 130 disposed between the first curved glass substrate and the second curved glass substrate. Such laminates are typically formed by shaping or curving a first glass substrate and a second glass substrate simultaneously to provide a first curved glass substrate and a second glass substrate having a substantially similar or identical shape to one another. Various methods are used to shape the glass substrates including co-shaping which shape both glass substrates simultaneously by stacking by the glass substrates on top of one another to form a stack and co-shaping the stack. Methods of co-shaping include co-sagging which uses gravity to sag or shape a pair or stack of the first and second glass substrates simultaneously while heating the stack until the stack reaches a viscoelastic phase. Other methods include co-shaping using molds or a vacuum alone or in combination with one another or in combination with co-sagging.

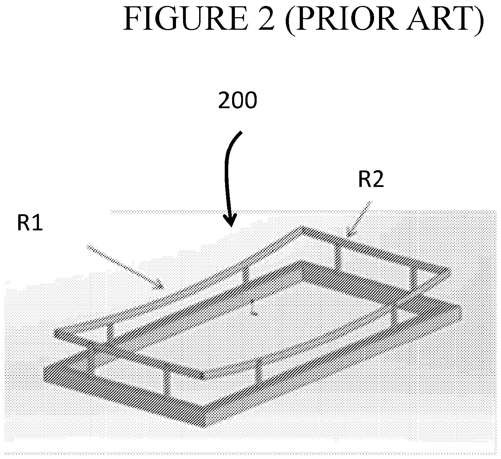

One co-shaping example is illustrated in Figure 2, which shows a bending frame 200 that has a first radius of curvature R1, and a second radius of curvature R2 to form a complexly curved glass substrate by co-sagging. To co-sag two glass substrates, such glass substrates are stacked on top of one another with intervening separation powder, which may include calcium carbonate. The stack is placed on the bending frame and the stack and bending frame are heated in a furnace until the glass substrates achieve a temperature equal to their softening temperature. At such a temperature, the glass substrates are bent or sagged by gravity. In some embodiments, a vacuum and/or mold can be used to facilitate co-sagging. The pair of glass substrates is typically separated by a thermally stable, thin layer of separation powder (2) such as sodium hydrogen carbonate, cerite, magnesium oxide, silica, CaCO₃, talc, zeolite or similar.

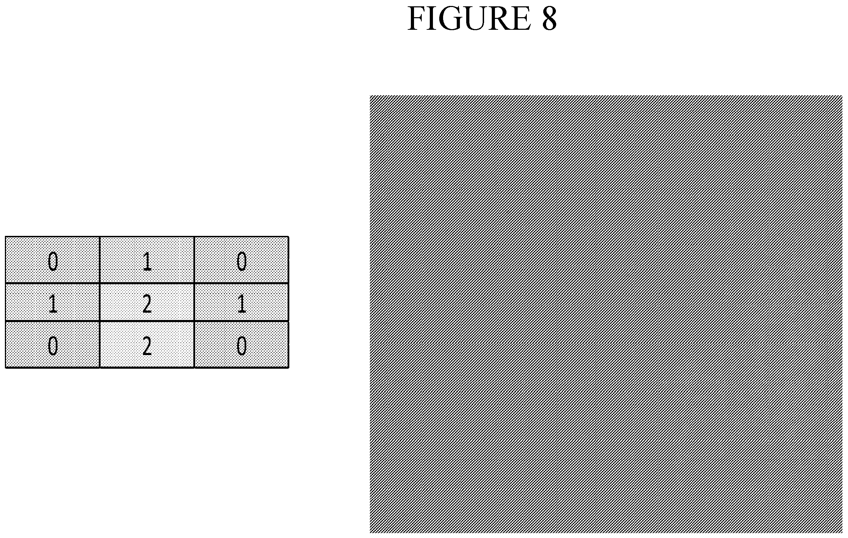

Pair sagging is typically done using two glass substrates of the same or nearly the same thickness. It is known within the automotive glazing industry that pair sagging asymmetric pairs (i.e., glass substrate of different thicknesses or viscosities) often leads to optical defects known in the industry as bending dots (see, e.g., Figure 8). This phenomenon has been attributed to an increase in contact pressure between the glass plies. For example, see US2014/0093702A1, section [0012], or US 5, 383,990, section 3. More specifically, the two plies do not soften at the same rate and/or shape and thus pressure is applied to the surfaces between the upper and lower glass plates, which can cause local deformations or indents, due to the presence of separation powder between the two glass plates. If sagged individually, a thicker ply will produce a more parabolic shape during gravity sagging, while a thinner ply will produce a "bath tub" like shape where curvature is greatest near the edges and is reduced near the center. As a result, the contact pressure is increased near the edges when a thin ply is sagged on top of a thick ply. Likewise, contact pressure is increased near the center when a thick ply is sagged on top of a thin ply. This increase in contact pressure is thought to contribute to the creation of bending dot defects.

Accordingly, there is a need for laminates that are lightweight and thinner to reduce the weight of vehicles that incorporate such laminates, while also have good optical performance and minimal defects from co-sagging.

### SUMMARY

One or more embodiments of this disclosure pertain to a laminate including a first curved glass substrate having a first major surface, a second major surface opposing the first major surface, a first thickness defined as the distance between the first major surface and second major surface, and a first sag depth of about 2 mm or greater. The laminate also includes a second curved glass substrate having a third major surface, a fourth major surface opposing the third major surface, a second thickness defined as the distance between the third major surface and the fourth major surface, and a second sag depth of about 2 mm or greater. The laminate further includes an interlayer disposed between the first curved glass substrate and the second curved glass substrate and adjacent the second major surface and third major surface. The first sag depth is within 10% of the second sag depth and a shape deviation between the first glass substrate and the second glass substrate of ± 5 mm or less as measured by an optical three-dimensional scanner, and one of or both the first curved glass and the second curbed glass have no visible bending dot defects.

One or more other embodiments pertain to a vehicle having a body defining an interior and an opening in communication with the interior, and a laminate according to any embodiments disclosed herein disposed in the opening.

One or more additional embodiments pertain to a method of forming a curved laminate. The method includes providing a first glass substrate having a first major surface, a second major surface opposite the first major surface, a first viscosity (poises), a first sag temperature, and a first thickness, and disposing separation media on top of the first glass substrate on the second major surface, the separation media being disposed in a predetermined pattern. The method further includes providing a second glass substrate having a third major surface, a fourth major surface, a second viscosity, a second sag temperature, and a second thickness. The method includes forming a stack with the first and second glass substrates and the separation media disposed therebetween; and heating the stack and co-shaping the stack to form a co-shaped stack, the co-shaped stack having a first curved glass substrate having a first sag depth and a second curved glass substrate each having a second sag depth. At least one of the second viscosity, the second sag temperature, and the second thickness is greater than the respective first viscosity the first sag temperature, and the first thickness. The predetermined pattern includes a first region of separation media on the second major surface and a second region of separation media on the second major surface, the second region being closer to an edge of the second major surface than the first region, where a second thickness of the separation media in the second region is greater than a first thickness of the separation media in the first region.

Additional features and advantages will be set forth in the detailed description which follows, and in part will be readily apparent to those skilled in the art from that description or recognized by practicing the embodiments as described herein, including the detailed description which follows, the claims, as well as the appended drawings.

It is to be understood that both the foregoing general description and the following detailed description are merely exemplary, and are intended to provide an overview or framework to understanding the nature and character of the claims. The accompanying drawings are included to provide a further understanding, and are incorporated in and constitute a part of this specification. The drawings illustrate one or more embodiment(s), and together with the description serve to explain principles and operation of the various embodiments.

### BRIEF DESCRIPTION OF THE DRAWINGS

Figure 1 is a side-view of a known glass laminate;
Figure 2 is a perspective view of a known bending frame used to shape glass substrates and laminates;
Figure 3 is a side view of shaped laminate according to one or more embodiments;
Figure 3A is a side view of a shaped laminate according to one or more embodiments;
Figure 4 is a side view of a glass substrates according to one or more embodiments;
Figure 5 is a perspective view of a vehicle according to one or more embodiments;
Figure 6 is a side cross-sectional view of a lehr furnace that can be used in a method according to one or more embodiments of a method for forming a curved laminate;
Figure 7 is an optical image analysis and data of bending dot deformation in a co-sagged laminate according to conventional methods;
Figure 8 is an optical image analysis and data of bending dot deformation in a co-sagged laminate according to one or more alternative embodiments of this disclosure;
Figure 9 is an optical image analysis and data of bending dot deformation in a co-sagged laminate according to one or more preferred embodiments of this disclosure
Figure 10 is a schematic cross-sectional view of a bending ring with glass plies and disposition of separation media according to one or more embodiments; and
Figure 11 is a plan view of the disposition of separation media according to one or more embodiments.

### DETAILED DESCRIPTION

Reference will now be made in detail to various embodiments, examples of which are illustrated in the accompanying drawings.

Aspects of this disclosure pertain to glass laminates that are thin or have a reduced weight compared to conventional laminates, while exhibiting superior strength and meeting regulatory requirements for use in automotive and architectural applications. Conventional laminates include two soda lime silicate glass substrates having a thickness in a range from about 1.6 mm to about 3 mm. To reduce the thickness of at least one of the glass substrates, while maintaining or improving the strength and other performance of the laminate, one of the glass substrates can include a strengthened glass substrate which tends to have very different viscosity as a function of temperature (or viscosity curve) than the soda lime silicate glass substrate. In particular, typical strengthened glass substrates exhibit a significantly higher viscosity at a given temperature than soda lime silicate glass substrates.

It was previously believed that co-shaping, and in particular co-sagging, such differing glass substrates, was not possible due to the difference in viscosity curves. However, as will be described herein, such successful co-shaping (including co-sagging) can be achieved to form a laminate that exhibits substantially minimal shape mismatch, minimal stress due to co-shaping, and low or substantially low optical distortion.

It was also generally understood that a glass substrate with lower viscosity (e.g., soda lime silicate glass substrate) could be co-sagged with a higher viscosity glass substrate by positing the lower viscosity glass substrate on top of the higher viscosity glass substrate. In particular, it was believed that the opposite configuration, the lower viscosity glass substrate would sag to a deeper depth than the higher viscosity glass substrate. Surprisingly, as will be described herein, successful co-sagging can be achieved with this opposite configuration - that is, the higher viscosity glass substrate is placed on top of the lower viscosity glass substrate. Such co-sagged glass substrates exhibit substantially identical shapes, while achieving a deep or large sag depth, and can be laminated together with an interlayer between the glass substrates to form a shaped laminate exhibiting minimal optical and stress defects.

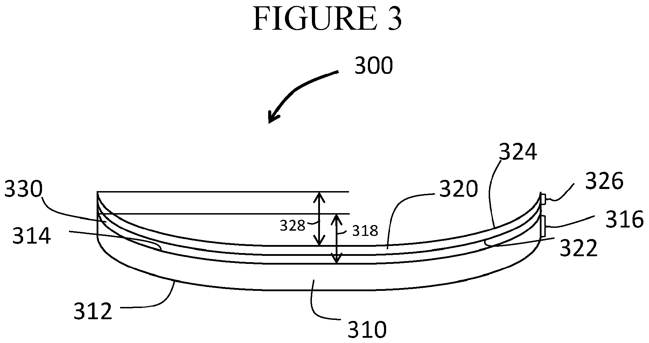

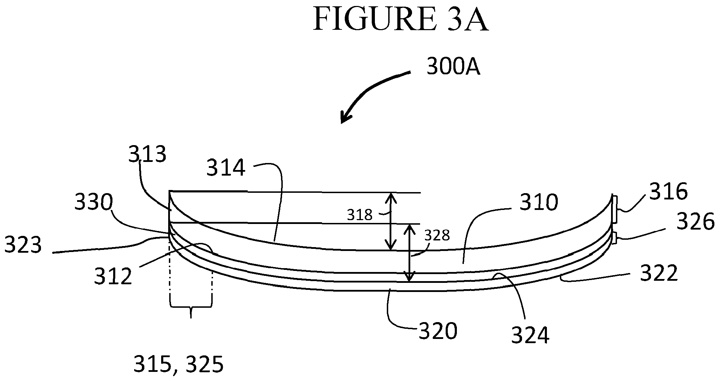

As used herein, the phrase "sag depth" refers to the maximum distance between two points on the same convex surface of a curved glass substrate, as illustrated in Figure 3 by reference characters "318" and "328". As illustrated in Figure 3, the point on the convex surface at the edge and the point on the convex surface at or near the center of the convex surface provide the maximum distance 318 and 328.

A first aspect of this disclosure pertains to a laminate 300 comprising a first curved glass substrate 310, a second curved glass substrate 320 and an interlayer 330 disposed between the first curved glass substrate and the second curved glass substrate, as illustrated in Figure 3. In one or more embodiments, the first curved glass substrate 310 includes a first major surface 312, a second major surface 314 opposing the first major surface, a minor surface 313 extending between the first major surface and the second major surface, a first thickness 316 defined as the distance between the first major surface and second major surface, and a first sag depth 318. In one or more embodiments, the first curved glass substrate 310 includes a peripheral portion 315 that extends from the minor surface 313 toward the internal portion of the first glass substrate. In one or more embodiments, the second curved glass substrate 320 includes a third major surface 322, a fourth major surface 324 opposing the third major surface, a minor surface 323 extending between the first major surface and the second major surface, a second thickness 326 defined as the distance between the third major surface and the fourth major surface, and a second sag depth 328. In one or more embodiments, the first curved glass substrate 310 includes a peripheral portion 325 that extends from the minor surface 323 toward the internal portion of the first glass substrate.

The first glass substrate 310 has a width defined as a first dimension of one of the first and second major surfaces that is orthogonal to the thickness, and a length defined as a second dimension of one of the first and second major surfaces orthogonal to both the thickness and the width. The first glass substrate 320 has a width defined as a first dimension of one of the first and second major surfaces that is orthogonal to the thickness, and a length defined as a second dimension of one of the first and second major surfaces orthogonal to both the thickness and the width. In one or more embodiments, the peripheral portion 315, 325 of one of or both the first and second glass substrates may have a peripheral length extending from the minor surface 313, 323 that is less than about 20% of the respective length and width dimensions of the first and second glass substrates. In one or more embodiments, the peripheral portion 315, 325 may have a peripheral length extending from the minor surface 313, 323 that is about 18% or less, about 16% or less, about 15% or less, about 14% or less, about 12% or less, about 10% or less, about 8% or less, or about 5 % or less of the respective length and width dimensions of the first and second glass substrates.

In one or more embodiments, the interlayer 330 is disposed between the first curved glass substrate and the second curved glass substrate such that it is adjacent the second major surface 314 and third major surface 322, as shown in Figure 3.

In the embodiment shown in Figure 3, the first surface 312 forms a convex surface and the fourth surface 324 forms a concave surface. In the embodiment of the laminate 300A shown in Figure 3A, the position of the glass substrates may be interchanged such that the interlayer 330 is disposed between the first curved glass substrate 310 and the second curved glass substrate 320 such that it is adjacent the first major surface 312 and fourth major surface 324. In such embodiments, the second surface 314 forms a convex surface and the third surface 322 forms a concave surface, as shown in Figure 3A.

In one or more embodiments, the first curved glass substrate (or the first glass substrate used to form the first curved glass substrate) exhibits a first viscosity (in units of poise) and the second curved glass substrate (or the second glass substrate used to form the second curved glass substrate) exhibits a second viscosity (in units of poise) that differs from the first viscosity at a given temperature. The given temperature in some embodiments may be from about 590 °C to about 650 °C (or at about 630 °C). In some embodiments, the second viscosity is equal to or greater than about 2 times, about 3 times, about 4 times, about 5 times, about 6 times, about 7 times, about 8 times, about 9 times, or about 10 times the first viscosity, at a temperature of 630 °C. In one or more embodiments, the second viscosity may be greater than or equal to 10 times the first viscosity at a given temperature. In one or more embodiments, the second viscosity is in a range from about 10 times the first viscosity to about 1000 times the first viscosity (e.g., from about 25 times to about 1000 times the first viscosity, from about 50 times to about 1000 times, from about 100 times to about 1000 times, from about 150 times to about 1000 times, from about 200 times to about 1000 times, from about 250 times to about 1000 times, from about 300 times to about 1000 times, from about 350 times to about 1000 times, from about 400 times to about 1000 times, from about 450 times to about 1000 times, from about 500 times to about 1000 times, from about 10 times to about 950 times, from about 10 times to about 900 times, from about 10 times to about 850 times, from about 10 times to about 800 times, from about 10 times to about 750 times, from about 10 times to about 700 times, from about 10 times to about 650 times, from about 10 times to about 600 times, from about 10 times to about 550 times, from about 10 times to about 500 times, from about 10 times to about 450 times, from about 10 times to about 400 times, from about 10 times to about 350 times, from about 10 times to about 300 times, from about 10 times to about 250 times, from about 10 times to about 200 times, from about 10 times to about 150 times, from about 10 times to about 100 times, from about 10 times to about 50 times, or from about 10 times to about 25 times the first viscosity.

In one or more embodiments in which the first glass substrate and/or the second glass substrate (or the first glass substrate and/or second glass substrate used to form the first curved glass substrate and second curved glass substrate, respectively) includes a mechanically strengthened glass substrate (as described herein), the first and/or second viscosity may be a composite viscosity.

In one or more embodiments, at 600 °C, the first viscosity is in a range from about 3 × 10¹⁰ poises to about 8 × 10¹⁰ poises, from about 4 × 10¹⁰ poises to about 8 × 10¹⁰ poises, from about 5 × 10¹⁰ poises to about 8 × 10¹⁰ poises, from about 6 × 10¹⁰ poises to about 8 × 10¹⁰ poises, from about 3 × 10¹⁰ poises to about 7 × 10¹⁰ poises, from about 3 × 10¹⁰ poises to about 6 × 10¹⁰ poises, from about 3 × 10¹⁰ poises to about 5 × 10¹⁰ poises, or from about 4 × 10¹⁰ poises to about 6 × 10¹⁰ poises.

In one or more embodiments, at 630 °C, the first viscosity is in a range from about 1 × 10⁹ poises to about 1 × 10¹⁰ poises, from about 2 × 10⁹ poises to about 1 × 10¹⁰ poises, from about 3 × 10⁹ poises to about 1 × 10¹⁰ poises, from about 4 × 10⁹ poises to about 1 × 10¹⁰ poises, from about 5 × 10⁹ poises to about 1 × 10¹⁰ poises, from about 6 × 10⁹ poises to about 1 × 10¹⁰ poises, from about 1 × 10⁹ poises to about 9 × 10⁹ poises, from about 1 × 10⁹ poises to about 8 × 10⁹ poises, from about 1 × 10⁹ poises to about 7 × 10⁹ poises, from about 1 × 10⁹ poises to about 6 × 10⁹ poises, from about 4 × 10⁹ poises to about 8 × 10⁹ poises, or from about 5 × 10⁹ poises to about 7 × 10⁹ poises.

In one or more embodiments, at 650 °C, the first viscosity is in a range from about 5 × 10⁸ poises to about 5 × 10⁹ poises, from about 6 × 10⁸ poises to about 5 × 10⁹ poises, from about 7 × 10⁸ poises to about 5 × 10⁹ poises, from about 8 × 10⁸ poises to about 5 × 10⁹ poises, from about 9 × 10⁸ poises to about 5 × 10⁹ poises, from about 1 × 10⁹ poises to about 5 × 10⁹ poises, from about 1 × 10⁹ poises to about 4 × 10⁹ poises, from about 1 × 10⁹ poises to about 3 × 10⁹ poises, from about 5 × 10⁸ poises to about 4 × 10⁹ poises, from about 5 × 10⁸ poises to about 3 × 10⁹ poises, from about 5 × 10⁸ poises to about 2 × 10⁹ poises, from about 5 × 10⁸ poises to about 1 × 10⁹ poises, from about 5 × 10⁸ poises to about 9 × 10⁸ poises, from about 5 × 10⁸ poises to about 8 × 10⁸ poises, or from about 5 × 10⁸ poises to about 7 × 10⁸ poises.

In one or more embodiments, at 600 °C, the second viscosity is in a range from about 2 × 10¹¹ poises to about 1 × 10¹⁵ poises, from about 4 × 10¹¹ poises to about 1 × 10¹⁵ poises, from about 5 × 10¹¹ poises to about 1 × 10¹⁵ poises, from about 6 × 10¹¹ poises to about 1 × 10¹⁵ poises, from about 8 × 10¹¹ poises to about 1 × 10¹⁵ poises, from about 1 × 10¹² poises to about 1 × 10¹⁵ poises, from about 2 × 10¹² poises to about 1 × 10¹⁵ poises, from about 4 × 10¹² poises to about 1 × 10¹⁵ poises, from about 5 × 10¹² poises to about 1 × 10¹⁵ poises, from about 6 × 10¹² poises to about 1 × 10¹⁵ poises, from about 8 × 10¹² poises to about 1 × 10¹⁵ poises, from about 1 × 10¹³ poises to about 1 × 10¹⁵ poises, from about 2 × 10¹³ poises to about 1 × 10¹⁵ poises, from about 4 × 10¹³ poises to about 1 × 10¹⁵ poises, from about 5 × 10¹³ poises to about 1 × 10¹⁵ poises, from about 6 × 10¹³ poises to about 1 × 10¹⁵ poises, from about 8 × 10¹³ poises to about 1 × 10¹⁵ poises, from about 1 × 10¹⁴ poises to about 1 × 10¹⁵ poises, from about 2 × 10¹¹ poises to about 8 × 10¹⁴ poises, from about 2 × 10¹¹ poises to about 6 × 10¹⁴ poises, from about 2 × 10¹¹ poises to about 5 × 10¹⁴ poises, from about 2 × 10¹¹ poises to about 4 × 10¹⁴ poises, from about 2 × 10¹¹ poises to about 2 × 10¹⁴ poises, from about 2 × 10¹¹ poises to about 1 × 10¹⁴ poises, from about 2 × 10¹¹ poises to about 8 × 10¹³ poises, from about 2 × 10¹¹ poises to about 6 × 10¹³ poises, from about 2 × 10¹¹ poises to about 5 × 10¹³ poises, from about 2 × 10¹¹ poises to about 4 × 10¹³ poises, from about 2 × 10¹¹ poises to about 2 × 10¹³ poises, from about 2 × 10¹¹ poises to about 1 × 10¹³ poises, from about 2 × 10¹¹ poises to about 8 × 10¹² poises, from about 2 × 10¹¹ poises to about 6 × 10¹² poises, or from about 2 × 10¹¹ poises to about 5 × 10¹² poises.

In one or more embodiments, at 630 °C, the second viscosity is in a range from about 2 × 10¹⁰ poises to about 1 × 10¹³ poises, from about 4 × 10¹⁰ poises to about 1 × 10¹³ poises, from about 5 × 10¹⁰ poises to about 1 × 10¹³ poises, from about 6 × 10¹⁰ poises to about 1 × 10¹³ poises, from about 8 × 10¹⁰ poises to about 1 × 10¹³ poises, from about 1 × 10¹¹ poises to about 1 × 10¹³ poises, from about 2 × 10¹¹ poises to about 1 × 10¹³ poises, from about 4 × 10¹¹ poises to about 1 × 10¹³ poises, from about 5 × 10¹¹ poises to about 1 × 10¹³ poises, from about 6 × 10¹¹ poises to about 1 × 10¹³ poises, from about 8 × 10¹¹ poises to about 1 × 10¹³ poises, from about 1 × 10¹² poises to about 1 × 10¹³ poises, from about 2 × 10¹⁰ poises to about 8 × 10¹² poises, from about 2 × 10¹⁰ poises to about 6 × 10¹² poises, from about 2 × 10¹⁰ poises to about 5 × 10¹² poises, from about 2 × 10¹⁰ poises to about 4 × 10¹² poises, from about 2 × 10¹⁰ poises to about 2 × 10¹² poises, from about 2 × 10¹⁰ poises to about 1 × 10¹² poises, from about 2 × 10¹⁰ poises to about 8 × 10¹¹ poises, from about 2 × 10¹⁰ poises to about 6 × 10¹¹ poises, from about 2 × 10¹⁰ poises to about 5 × 10¹¹ poises, from about 2 × 10¹⁰ poises to about 4 × 10¹¹ poises, or from about 2 × 10¹⁰ poises to about 2 × 10¹¹ poises.

In one or more embodiments, at 650 °C, the second viscosity is in a range from about 1 × 10¹⁰ poises to about 1 × 10¹³ poises, from about 2 × 10¹⁰ poises to about 1 × 10¹³ poises, from about 4 × 10¹⁰ poises to about 1 × 10¹³ poises, from about 5 × 10¹⁰ poises to about 1 × 10¹³ poises, from about 6 × 10¹⁰ poises to about 1 × 10¹³ poises, from about 8 × 10¹⁰ poises to about 1 × 10¹³ poises, from about 1 × 10¹¹ poises to about 1 × 10¹³ poises, from about 2 × 10¹¹ poises to about 1 × 10¹³ poises, from about 4 × 10¹¹ poises to about 1 × 10¹³ poises, from about 4 × 10¹¹ poises to about 1 × 10¹³ poises, from about 5 × 10¹¹ poises to about 1 × 10¹³ poises, from about 6 × 10¹¹ poises to about 1 × 10¹³ poises, from about 8 × 10¹¹ poises to about 1 × 10¹³ poises, from about 1 × 10¹² poises to about 1 × 10¹³ poises, from about 1 × 10¹⁰ poises to about 8 × 10¹² poises, from about 1 × 10¹⁰ poises to about 6 × 10¹² poises, from about 1 × 10¹⁰ poises to about 5 × 10¹² poises, from about 1 × 10¹⁰ poises to about 4 × 10¹² poises, from about 1 × 10¹⁰ poises to about 2 × 10¹² poises, from about 1 × 10¹⁰ poises to about 1 × 10¹² poises, from about 1 × 10¹⁰ poises to about 8 × 10¹¹ poises, from about 1 × 10¹⁰ poises to about 6 × 10¹¹ poises, from about 1 × 10¹⁰ poises to about 5 × 10¹¹ poises, from about 1 × 10¹⁰ poises to about 4 × 10¹¹ poises, from about 1 × 10¹⁰ poises to about 2 × 10¹¹ poises, or from about 1 × 10¹⁰ poises to about 1 × 10¹¹ poises.

In one or more embodiments, the first curved substrate and the second curved substrate (or the first glass substrate and the second glass substrate used to form the first curved glass substrate and the second curved glass substrate, respectively) may have a sag temperature that differs from one another. As used herein, "sag temperature" means the temperature at which the viscosity of the glass substrate is about 10^{9.9} poises. The sag temperature is determined by fitting the Vogel-Fulcher-Tamman (VFT) equation: Log h = A + B/(T-C), where T is the temperature, A, B and C are fitting constants and h is the dynamic viscosity, to annealing point data measured using the bending beam viscosity (BBV) measurement, to softening point data measured by fiber elongation. In one or more embodiments, the first curved glass substrate (or the first glass substrate used to form the first curved glass substrate) may have a first sag temperature and the second curved glass substrate (or the second glass substrate used to form the second curved glass substrate) has a second sag temperature that is greater than the first sag temperature. For example, the first sag temperature may be in a range from about 600 °C to about 650 °C, from about 600 °C to about 640 °C, from about 600 °C to about 630 °C, from about 600 °C to about 625 °C, from about 600 °C to about 620 °C, from about 610 °C to about 650 °C, from about 620 °C to about 650 °C, from about 625 °C to about 650 °C, from about 630 °C to about 650 °C, from about 620 °C to about 640 °C, or from about 625 °C to about 635 °C. In one or more embodiments, the second sag temperature may be greater than about 650 °C (e.g., from greater than about 650 °C to about 800 °C, from greater than about 650 °C to about 790 °C, from greater than about 650 °C to about 780 °C, from greater than about 650 °C to about 770 °C, from greater than about 650 °C to about 760 °C, from greater than about 650 °C to about 750 °C, from greater than about 650 °C to about 740 °C, from greater than about 650 °C to about 740 °C, from greater than about 650 °C to about 730 °C, from greater than about 650 °C to about 725 °C, from greater than about 650 °C to about 720 °C, from greater than about 650 °C to about 710 °C, from greater than about 650 °C to about 700 °C, from greater than about 650 °C to about 690 °C, from greater than about 650 °C to about 680 °C, from about 660 °C to about 750 °C, from about 670 °C to about 750 °C, from about 680 °C to about 750 °C, from about 690 °C to about 750 °C, from about 700 °C to about 750 °C, from about 710 °C to about 750 °C, or from about 720 °C to about 750 °C.

In one or more embodiments, the difference between the first sag temperature and the second sag temperature is about 5 °C or greater, about 10 °C or greater, about 15 °C or greater, about 20 °C or greater, about 25 °C or greater, about 30 °C or greater, or about 35 °C or greater. For example, the difference between the first sag temperature and the second sag temperature is in a range from about 5 °C to about 150 °C, from about 10 °C to about 150 °C, from about 15 °C to about 150 °C, from about 20 °C to about 150 °C, from about 25 °C to about 150 °C, from about 30 °C to about 150 °C, from about 40 °C to about 150 °C, from about 50 °C to about 150 °C, from about 60 °C to about 150 °C, from about 80 °C to about 150 °C, from about 100 °C to about 150 °C, from about 5 °C to about 140 °C, from about 5 °C to about 120 °C, from about 5 °C to about 100 °C, from about 5 °C to about 80 °C, from about 5 °C to about 60 °C, or from about 5 °C to about 50 °C.

In one or more embodiments, one or both the first sag depth 318 and the second sag depth 328 is about 2 mm or greater. For example, one or both the first sag depth 318 and the second sag depth 328 may be in a range from about 2 mm to about 30 mm, from about 4 mm to about 30 mm, from about 5 mm to about 30 mm, from about 6 mm to about 30 mm, from about 8 mm to about 30 mm, from about 10 mm to about 30 mm, from about 12 mm to about 30 mm, from about 14 mm to about 30 mm, from about 15 mm to about 30 mm, from about 2 mm to about 28 mm, from about 2 mm to about 26 mm, from about 2 mm to about 25 mm, from about 2 mm to about 24 mm, from about 2 mm to about 22 mm, from about 2 mm to about 20 mm, from about 2 mm to about 18 mm, from about 2 mm to about 16 mm, from about 2 mm to about 15 mm, from about 2 mm to about 14 mm, from about 2 mm to about 12 mm, from about 2 mm to about 10 mm, from about 2 mm to about 8 mm, from about 6 mm to about 20 mm, from about 8 mm to about 18 mm, from about 10 mm to about 15 mm, from about 12 mm to about 22 mm, from about 15 mm to about 25 mm, or from about 18 mm to about 22 mm.

In one or more embodiments, the first sag depth 318 and the second sag depth 328 are substantially equal to one another. In one or more embodiments, the first sag depth is within 10% of the second sag depth. For example, the first sag depth is within 9%, within 8%, within 7%, within 6% or within 5% of the second sag depth. For illustration, the second sag depth is about 15 mm, and the first sag depth is in a range from about 14.5 mm to about 16.5 mm (or within 10% of the second sag depth).

In one or more embodiments, the first curved glass substrate and the second curved glass substrate comprise a shape deviation therebetween the first glass substrate and the second glass substrate of ± 5 mm or less as measured by an optical three-dimensional scanner such as the ATOS Triple Scan supplied by GOM GmbH, located in Braunschweig, Germany. In one or more embodiments, the shape deviation is measured between the second surface 314 and the third surface 322, or between the first surface 312 and the fourth surface 324. In one or more embodiments, the shape deviation between the first glass substrate and the second glass substrate is about ± 4 mm or less, about ±3 mm or less, about ± 2 mm or less, about ± 1 mm or less, about ± 0.8 mm or less, about ± 0.6 mm or less, about ± 0.5 mm or less, about ± 0.4 mm or less, about ± 0.3 mm or less, about ± 0.2 mm or less, or about ± 0.1 mm or less. As used herein, the shape deviation refers to the maximum shape deviation measured on the respective surfaces.

In one or more embodiments, one of or both the first major surface 312 and the fourth major surface 324 exhibit minimal optical distortion. For example, one of or both the first major surface 312 and the fourth major surface 324 exhibit less than about 400 millidiopters, less than about 300 millidiopters, or less than about 250 millidiopters, as measured by an optical distortion detector using transmission optics according to ASTM 1561. A suitable optical distortion detector is supplied by ISRA VISIION AG, located in Darmstadt, Germany, under the tradename SCREENSCAN-Faultfinder. In one or more embodiments, one of or both the first major surface 312 and the fourth major surface 324 exhibit about 190 millidiopters or less, about 180 millidiopters or less, about 170 millidiopters or less, about 160 millidiopters or less, about 150 millidiopters or less, about 140 millidiopters or less, about 130 millidiopters or less, about 120 millidiopters or less, about 110 millidiopters or less, about 100 millidiopters or less, about 90 millidiopters or less, about 80 millidiopters or less, about 70 millidiopters or less, about 60 millidiopters or less, or about 50 millidiopters or less. As used herein, the optical distortion refers to the maximum optical distortion measured on the respective surfaces.

In one or more embodiments, the first major surface or the second major surface of the first curved glass substrate exhibits low membrane tensile stress. Membrane tensile stress can occur during cooling of curved substrates and laminates. As the glass cools, the major surfaces and edge surfaces (orthogonal to the major surfaces) can develop surface compression, which is counterbalanced by a central region exhibiting a tensile stress. Bending or shaping can introduce additional surface tension near the edge and causes the central tensile region to approach the glass surface. Accordingly, membrane tensile stress is the tensile stress measured near the edge (e.g., about 10-25 mm from the edge surface). In one or more embodiments, the membrane tensile stress at the first major surface or the second major surface of the first curved glass substrate is less than about 7 megaPascals (MPa) as measured by a surface stress meter according to ASTM C1279. An example of such a surface stress meter is supplied by Strainoptic Technologies under the trademark GASP^{®} (Grazing Angle Surface Polarimeter). In one or more embodiments, the membrane tensile stress at the first major surface or the second major surface of the first curved glass substrate is about 6 MPa or less, about 5 MPa or less, about 4 MPa or less, or about 3 MPa or less. In one or more embodiments, the lower limit of membrane tensile stress is about 0.01 MPa or about 0.1 MPa. As recited herein, stress is designated as either compressive or tensile, with the magnitude of such stress provided as an absolute value.

In one or more embodiments, the membrane compressive stress at the first major surface or the second major surface of the first curved glass substrate is less than about 7 megaPascals (MPa) as measured by a surface stress meter according to ASTM C1279. A surface stress meter such as the surface stress meter supplied by Strainoptic Technologies under the trademark GASP^{®} (Grazing Angle Surface Polarimeter) may be used. In one or more embodiments, the membrane compressive stress at the first major surface or the second major surface of the first curved glass substrate is about 6 MPa or less, about 5 MPa or less, about 4 MPa or less, or about 3 MPa or less. In one or more embodiments, the lower limit of membrane compressive stress is about 0.01 MPa or about 0.1 MPa.

In one or more embodiments, the laminate 300 may have a thickness of 6.85 mm or less, or 5.85 mm or less, where the thickness comprises the sum of thicknesses of the first curved glass substrate, the second curved glass substrate, and the interlayer. In various embodiments, the laminate may have a thickness in the range of about 1.8 mm to about 6.85 mm, or in the range of about 1.8 mm to about 5.85 mm, or in the range of about 1.8 mm to about 5.0 mm, or 2.1 mm to about 6.85 mm, or in the range of about 2.1 mm to about 5.85 mm, or in the range of about 2.1 mm to about 5.0 mm, or in the range of about 2.4 mm to about 6.85 mm, or in the range of about 2.4 mm to about 5.85 mm, or in the range of about 2.4 mm to about 5.0 mm, or in the range of about 3.4 mm to about 6.85 mm, or in the range of about 3.4 mm to about 5.85 mm, or in the range of about 3.4 mm to about 5.0 mm.

In one or more embodiments, the laminate 300 exhibits radii of curvature that is less than 1000 mm, or less than 750 mm, or less than 500 mm, or less than 300 mm. In one or more embodiments, the laminate 300 exhibits at least one radius of curvature of about 10 m or less, or about 5 m or less along at least one axis. In one or more embodiments, the laminate 300 may have a radius of curvature of 5 m or less along at least a first axis and along the second axis that is perpendicular to the first axis. In one or more embodiments, the laminate may have a radius of curvature of 5 m or less along at least a first axis and along the second axis that is not perpendicular to the first axis.

In one or more embodiments the second curved glass substrate (or the second glass substrate used to form the second curved glass substrate) is relatively thin in comparison to the first curved glass substrate (or the first glass substrate used to form the first curved glass substrate). In other words, the first curved glass substrate (or the first glass substrate used to form the first curved glass substrate) has a thickness greater than the second curved glass substrate (or the second glass substrate used to form the second curved glass substrate). In one or more embodiments, the first thickness (or the thickness of the first glass substrate used to form the first curved glass substrate) is more than two times the second thickness. In one or more embodiments, the first thickness (or the thickness of the first glass substrate used to form the first curved glass substrate) is in the range from about 1.5 times to about 10 times the second thickness (e.g., from about 1.75 times to about 10 times, from about 2 times to about 10 times, from about 2.25 times to about 10 times, from about 2.5 times to about 10 times, from about 2.75 times to about 10 times, from about 3 times to about 10 times, from about 3.25 times to about 10 times, from about 3.5 times to about 10 times, from about 3.75 times to about 10 times, from about 4 times to about 10 times, from about 1.5 times to about 9 times, from about 1.5 times to about 8 times, from about 1.5 times to about 7.5 times, from about 1.5 times to about 7 times, from about 1.5 times to about 6.5 times, from about 1.5 times to about 6 times, from about 1.5 times to about 5.5 times, from about 1.5 times to about 5 times, from about 1.5 times to about 4.5 times, from about 1.5 times to about 4 times, from about 1.5 times to about 3.5 times, from about 2 times to about 7 times, from about 2.5 times to about 6 times, from about 3 times to about 6 times).

In one or more embodiments, the first curved glass substrate (or the first glass substrate used to form the first curved glass substrate) and the second curved glass substrate (or the second glass substrate used to form the second curved glass substrate) may have the same thickness. In one or more specific embodiments, the first curved glass substrate (or the first glass substrate used to form the first curved glass substrate) is more rigid or has a greater stiffness than the second curved glass substrate (or the second glass substrate used to form the second curved glass substrate), and in very specific embodiments, both the first curved glass substrate (or the first glass substrate used to form the first curved glass substrate) and the second curved glass substrate (or the second glass substrate used to form the second curved glass substrate) have a thickness in the range of 0.2 mm and 1.6 mm.

In one or more embodiments, either one or both the first thickness (or the thickness of the first glass substrate used to form the first curved glass substrate) and the second thickness (or the thickness of the second glass substrate used to form the second curved glass substrate) is less than 1.6 mm (e.g., 1.55 mm or less, 1.5 mm or less, 1.45 mm or less, 1.4 mm or less, 1.35 mm or less, 1.3 mm or less, 1.25 mm or less, 1.2 mm or less, 1.15 mm or less, 1.1 mm or less, 1.05 mm or less, 1 mm or less, 0.95 mm or less, 0.9 mm or less, 0.85 mm or less, 0.8 mm or less, 0.75 mm or less, 0.7 mm or less, 0.65 mm or less, 0.6 mm or less, 0.55 mm or less, 0. 5mm or less, 0.45 mm or less, 0. 4 mm or less, 0.35 mm or less, 0. 3 mm or less, 0.25 mm or less, 0.2 mm or less, 0.15 mm or less, or about 0.1 mm or less). The lower limit of thickness may be 0.1 mm, 0. 2mm or 0.3 mm. In some embodiments, either one or both the first thickness (or the thickness of the first glass substrate used to form the first curved glass substrate) and the second thickness (or the thickness of the second glass substrate used to form the second curved glass substrate) is in the range from about 0.1 mm to less than about 1.6 mm, from about 0.1 mm to about 1.5 mm, from about 0.1 mm to about 1.4 mm, from about 0.1 mm to about 1.3 mm, from about 0.1 mm to about 1.2 mm, from about 0.1 mm to about 1.1 mm, from about 0.1 mm to about 1 mm, from about 0.1 mm to about 0.9 mm, from about 0.1 mm to about 0.8 mm, from about 0.1 mm to about 0.7 mm, from about 0.1 mm, from about 0.2 mm to less than about 1.6 mm, from about 0.3 mm to less than about 1.6 mm, from about 0.4 mm to less than about 1.6 mm, from about 0.5 mm to less than about 1.6 mm, from about 0.6 mm to less than about 1.6 mm, from about 0.7 mm to less than about 1.6 mm, from about 0.8 mm to less than about 1.6 mm, from about 0.9 mm to less than about 1.6 mm, or from about 1 mm to about 1.6 mm.

In some embodiments, while one of the first thickness (or the thickness of the first glass substrate used to form the first curved glass substrate) and the second thickness (or the thickness of the second glass substrate used to form the second curved glass substrate) is less than about 1.6 mm, the other of the first thickness (or the thickness of the first glass substrate used to form the first curved glass substrate) and the second thickness (or the thickness of the second glass substrate used to form the second curved glass substrate) is about 1.6 mm or greater. In such embodiments, first thickness (or the thickness of the first glass substrate used to form the first curved glass substrate) and the second thickness (or the thickness of the second glass substrate used to form the second curved glass substrate) differ from one another. For example, the while one of the first thickness (or the thickness of the first glass substrate used to form the first curved glass substrate) and the second thickness (or the thickness of the second glass substrate used to form the second curved glass substrate) is less than about 1.6 mm, the other of the first thickness (or the thickness of the first glass substrate used to form the first curved glass substrate) and the second thickness (or the thickness of the second glass substrate used to form the second curved glass substrate) is about 1.7 mm or greater, about 1.75 mm or greater, about 1.8 mm or greater, about 1.7 mm or greater, about 1.7 mm or greater, about 1.7 mm or greater, about 1.85 mm or greater, about 1.9 mm or greater, about 1.95 mm or greater, about 2 mm or greater, about 2.1 mm or greater, about 2.2 mm or greater, about 2.3 mm or greater, about 2.4 mm or greater, 2.5 mm or greater, 2.6 mm or greater, 2.7 mm or greater, 2.8 mm or greater, 2.9 mm or greater, 3 mm or greater, 3.2 mm or greater, 3.4 mm or greater, 3.5 mm or greater, 3.6 mm or greater, 3.8 mm or greater, 4 mm or greater, 4.2 mm or greater, 4.4 mm or greater, 4.6 mm or greater, 4.8 mm or greater, 5 mm or greater, 5.2 mm or greater, 5.4 mm or greater, 5.6 mm or greater, 5.8 mm or greater, or 6 mm or greater. In some embodiments the first thickness (or the thickness of the first glass substrate used to form the first curved glass substrate) or the second thickness (or the thickness of the second glass substrate used to form the second curved glass substrate) is in a range from about 1.6 mm to about 6 mm, from about 1.7 mm to about 6 mm, from about 1.8 mm to about 6 mm, from about 1.9 mm to about 6 mm, from about 2 mm to about 6 mm, from about 2.1 mm to about 6 mm, from about 2.2 mm to about 6 mm, from about 2.3 mm to about 6 mm, from about 2.4 mm to about 6 mm, from about 2.5 mm to about 6 mm, from about 2.6 mm to about 6 mm, from about 2.8 mm to about 6 mm, from about 3 mm to about 6 mm, from about 3.2 mm to about 6 mm, from about 3.4 mm to about 6 mm, from about 3.6 mm to about 6 mm, from about 3.8 mm to about 6 mm, from about 4 mm to about 6 mm, from about 1.6 mm to about 5.8 mm, from about 1.6 mm to about 5.6 mm, from about 1.6 mm to about 5.5 mm, from about 1.6 mm to about 5.4 mm, from about 1.6 mm to about 5.2 mm, from about 1.6 mm to about 5 mm, from about 1.6 mm to about 4.8 mm, from about 1.6 mm to about 4.6 mm, from about 1.6 mm to about 4.4 mm, from about 1.6 mm to about 4.2 mm, from about 1.6 mm to about 4 mm, from about 3.8 mm to about 5.8 mm, from about 1.6 mm to about 3.6 mm, from about 1.6 mm to about 3.4 mm, from about 1.6 mm to about 3.2 mm, or from about 1.6 mm to about 3 mm.

In one or more specific examples, the first thickness (or the thickness of the first glass substrate used to form the first curved glass substrate) is from about 1.6 mm to about 3 mm, and the second thickness (or the thickness of the second glass substrate used to form the second curved glass substrate) is in a range from about 0.1 mm to less than about 1.6 mm.

In one or more embodiments, the laminate 300 is substantially free of visual distortion as measured by ASTM C1652/C1652M. In specific embodiments, the laminate, the first curved glass substrate and/or the second curved glass substrate are substantially free of wrinkles or distortions that can be visually detected by the naked eye, according to ASTM C1652/C1652M.

In one or more embodiments, the first major surface 312 or the second major surface 314 comprises a surface compressive stress of less than 3 MPa as measured by a surface stress meter, such as the surface stress meter commercially available under the tradename FSM-6000, from Orihara Industrial Co., Ltd. (Japan) ("FSM"). In some embodiments, the first curved glass substrate is unstrengthened as will be described herein (but may optionally be annealed), and exhibits a surface compressive stress of less than about 3 MPa, or about 2.5 MPa or less, 2 MPa or less, 1.5 MPa or less, 1 MPa or less, or about 0.5 MPa or less. In some embodiments, such surface compressive stress ranges are present on both the first major surface and the second major surface.

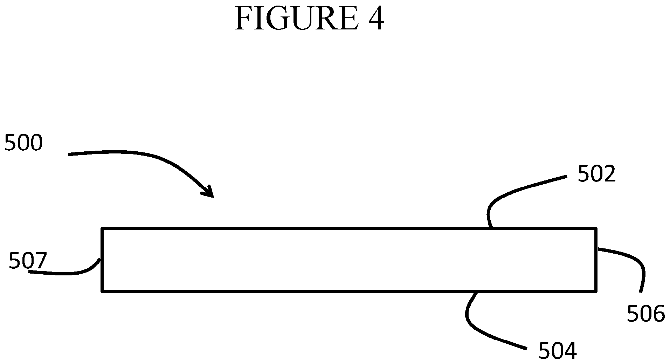

In one or more embodiments, the first and second glass substrates used to form the first curved glass substrate and second curved substrate are provided as a substantially planar sheet 500 prior to being co-shaped to form a first curved glass substrate and second curved glass substrate, as shown in Figure 4. The substantially planar sheets may include first and second major opposing surfaces 502, 504 and minor opposing surfaces 506, 507. In some instances, one or both of the first glass substrate and the second glass substrate used to form the first curved glass substrate and second curved substrate may have a 3D or 2.5D shape that does not exhibit the sag depth desired and will eventually be formed during the co-shaping process and present in the resulting laminate. Additionally or alternatively, the thickness of the one or both of the first curved glass substrate (or the first glass substrate used to form the first curved glass substrate) and the second curved glass substrate (or the second glass substrate used to form the second curved glass substrate) may be constant along one or more dimension or may vary along one or more of its dimensions for aesthetic and/or functional reasons. For example, the edges of one or both of the first curved glass substrate (or the first glass substrate used to form the first curved glass substrate) and the second curved glass substrate (or the second glass substrate used to form the second curved glass substrate) may be thicker as compared to more central regions of the glass substrate.

The length, width and thickness dimensions of the first curved glass substrate (or the first glass substrate used to form the first curved glass substrate) and the second curved glass substrate (or the second glass substrate used to form the second curved glass substrate) may also vary according to the article application or use. In one or more embodiments, the first curved glass substrate 310 (or the first glass substrate used to form the first curved glass substrate) includes a first length and a first width (the first thickness is orthogonal both the first length and the first width), and the second curved glass substrate 320 (or the second glass substrate used to form the second curved glass substrate) includes a second length and a second width orthogonal the second length (the second thickness is orthogonal both the second length and the second width). In one or more embodiments, either one of or both the first length and the first width is about 0.25 meters (m) or greater. For example, the first length and/or the second length may be in a range from about 1 m to about 3 m, from about 1.2 m to about 3 m, from about 1.4 m to about 3 m, from about 1.5 m to about 3 m, from about 1.6 m to about 3 m, from about 1.8 m to about 3 m, from about 2 m to about 3 m, from about 1 m to about 2.8 m, from about 1 m to about 2.8 m, from about 1 m to about 2.8 m, from about 1 m to about 2.8 m, from about 1 m to about 2.6 m, from about 1 m to about 2.5 m, from about 1 m to about 2.4 m, from about 1 m to about 2.2 m, from about 1 m to about 2 m, from about 1 m to about 1.8 m, from about 1 m to about 1.6 m, from about 1 m to about 1.5 m, from about 1.2 m to about 1.8 m or from about 1.4 m to about 1.6 m.

For example, the first width and/or the second width may be in a range from about 0.5 m to about 2 m, from about 0.6 m to about 2 m, from about 0.8 m to about 2 m, from about 1 m to about 2 m, from about 1.2 m to about 2 m, from about 1.4 m to about 2 m, from about 1.5 m to about 2 m, from about 0.5 m to about 1.8 m, from about 0.5 m to about 1.6 m, from about 0.5 m to about 1.5 m, from about 0.5 m to about 1.4 m, from about 0.5 m to about 1.2 m, from about 0.5 m to about 1 m, from about 0.5 m to about 0.8 m, from about 0.75 m to about 1.5 m, from about 0.75 m to about 1.25 m, or from about 0.8 m to about 1.2 m.

In one or more embodiments, the second length is within 5% of the first length (e.g., about 5% or less, about 4% or less, about 3% or less, or about 2% or less). For example if the first length is 1.5 m, the second length may be in a range from about 1.425 m to about 1.575 m and still be within 5% of the first length. In one or more embodiments, the second width is within 5% of the first width (e.g., about 5% or less, about 4% or less, about 3% or less, or about 2% or less). For example if the first width is 1 m, the second width may be in a range from about 1.05 m to about 0.95 m and still be within 5% of the first width.

In one or more embodiments, the first curved glass substrate (or the first glass substrate used to form the first curved glass substrate) and the second curved glass substrate (or the second glass substrate used to form the second curved glass substrate) may have a refractive index in the range from about 1.2 to about 1.8, from about 1.2 to about 1.75, from about 1.2 to about 1.7, from about 1.2 to about 1.65, from about 1.2 to about 1.6, from about 1.2 to about 1.55, from about 1.25 to about 1.8, from about 1.3 to about 1.8, from about 1.35 to about 1.8, from about 1.4 to about 1.8, from about 1.45 to about 1.8, from about 1.5 to about 1.8, from about 1.55 to about 1.8, of from about 1.45 to about 1.55. As used herein, the refractive index values are with respect to a wavelength of 550 nm.

In one or more embodiments, the first curved glass substrate (or the first glass substrate used to form the first curved glass substrate) and the second curved glass substrate (or the second glass substrate used to form the second curved glass substrate) may be characterized by the manner in which it is formed. For instance, one of or both the first curved glass substrate (or the first glass substrate used to form the first curved glass substrate) and the second curved glass substrate (or the second glass substrate used to form the second curved glass substrate) may be characterized as float-formable (i.e., formed by a float process), down-drawable and, in particular, fusion-formable or slot-drawable (i.e., formed by a down draw process such as a fusion draw process or a slot draw process).

One of or both the first curved glass substrate (or the first glass substrate used to form the first curved glass substrate) and the second curved glass substrate (or the second glass substrate used to form the second curved glass substrate) described herein may be formed by a float process. A float-formable glass substrate may be characterized by smooth surfaces and uniform thickness is made by floating molten glass on a bed of molten metal, typically tin. In an example process, molten glass that is fed onto the surface of the molten tin bed forms a floating glass ribbon. As the glass ribbon flows along the tin bath, the temperature is gradually decreased until the glass ribbon solidifies into a solid glass substrate that can be lifted from the tin onto rollers. Once off the bath, the glass substrate can be cooled further and annealed to reduce internal stress.

One of or both the first curved glass substrate (or the first glass substrate used to form the first curved glass substrate) and the second curved glass substrate (or the second glass substrate used to form the second curved glass substrate) may be formed by a down-draw process. Down-draw processes produce glass substrates having a substantially uniform thickness that possess relatively pristine surfaces. Because the average flexural strength of the glass substrates is generally controlled by the amount and size of surface flaws, a pristine surface that has had minimal contact has a higher initial strength. In addition, down drawn glass substrates have a very flat, smooth surface that can be used in its final application without costly grinding and polishing.

One of or both the first curved glass substrate (or the first glass substrate used to form the first curved glass substrate) and the second curved glass substrate (or the second glass substrate used to form the second curved glass substrate) may be described as fusion-formable (i.e., formable using a fusion draw process). The fusion process uses a drawing tank that has a channel for accepting molten glass raw material. The channel has weirs that are open at the top along the length of the channel on both sides of the channel. When the channel fills with molten material, the molten glass overflows the weirs. Due to gravity, the molten glass flows down the outside surfaces of the drawing tank as two flowing glass films. These outside surfaces of the drawing tank extend down and inwardly so that they join at an edge below the drawing tank. The two flowing glass films join at this edge to fuse and form a single flowing glass substrate. The fusion draw method offers the advantage that, because the two glass films flowing over the channel fuse together, neither of the outside surfaces of the resulting glass substrate comes in contact with any part of the apparatus. Thus, the surface properties of the fusion drawn glass substrate are not affected by such contact.

One of or both the first curved glass substrate (or the first glass substrate used to form the first curved glass substrate) and the second curved glass substrate (or the second glass substrate used to form the second curved glass substrate) described herein may be formed by a slot draw process. The slot draw process is distinct from the fusion draw method. In slow draw processes, the molten raw material glass is provided to a drawing tank. The bottom of the drawing tank has an open slot with a nozzle that extends the length of the slot. The molten glass flows through the slot/nozzle and is drawn downward as a continuous glass substrate and into an annealing region.

In one or more embodiments, one of or both the first curved glass substrate (or the first glass substrate used to form the first curved glass substrate) and the second curved glass substrate (or the second glass substrate used to form the second curved glass substrate) and second substrate may be glass (e.g., soda lime glass, alkali aluminosilicate glass, alkali containing borosilicate glass and/or alkali aluminoborosilicate glass) or glass-ceramic. In some embodiments, one of or both the first curved glass substrate (or the first glass substrate used to form the first curved glass substrate) and the second curved glass substrate (or the second glass substrate used to form the second curved glass substrate) described herein may exhibit an amorphous microstructure and may be substantially free of crystals or crystallites. In other words, the glass substrates of certain embodiments exclude glass-ceramic materials. In some embodiments, one of or both the first curved glass substrate (or the first glass substrate used to form the first curved glass substrate) and the second curved glass substrate (or the second glass substrate used to form the second curved glass substrate) is a glass-ceramic. Examples of suitable glass-ceramics include Li₂O-Al₂O₃-SiO₂ system (i.e. LAS-System) glass-ceramics, MgO-Al₂O₃-SiO₂ system (i.e. MAS-System) glass-ceramics, and glass-ceramics including crystalline phases of any one or more of mullite, spinel, α-quartz, β-quartz solid solution, petalite, lithium dissilicate, β-spodumene, nepheline, and alumina. Such substrates including glass-ceramic materials may be strengthened as described herein.

In one or more embodiments, one of or both the first curved glass substrate (or the first glass substrate used to form the first curved glass substrate) and the second curved glass substrate (or the second glass substrate used to form the second curved glass substrate) exhibits a total solar transmittance of about 92% or less, over a wavelength range from about 300 nm to about 2500 nm, when the glass substrate has a thickness of 0.7 mm. For example, the one of or both the first and second glass substrates exhibits a total solar transmittance in a range from about 60% to about 92%, from about 62% to about 92%, from about 64% to about 92%, from about 65% to about 92%, from about 66% to about 92%, from about 68% to about 92%, from about 70% to about 92%, from about 72% to about 92%, from about 60% to about 90%, from about 60% to about 88%, from about 60% to about 86%, from about 60% to about 85%, from about 60% to about 84%, from about 60% to about 82%, from about 60% to about 80%, from about 60% to about 78%, from about 60% to about 76%, from about 60% to about 75%, from about 60% to about 74%, or from about 60% to about 72%.

In one or more embodiments, one or both the first curved glass substrate (or the first glass substrate used to form the first curved glass substrate) and the second curved glass substrate (or the second glass substrate used to form the second curved glass substrate) are tinted. In such embodiments, the first curved glass substrate (or the first glass substrate used to form the first curved glass substrate) may comprise a first tint and the second curved glass substrate (or the second glass substrate used to form the second curved glass substrate) comprises a second tint that differs from the first tint, in the CIE L*a*b* (CIELAB) color space. In one or more embodiments, the first tint and the second tint are the same. In one or more specific embodiments, the first curved glass substrate comprises a first tint, and the second curved glass substrate is not tinted. In one or more specific embodiments, the second curved glass substrate comprises a second tint, and the first curved glass substrate is not tinted.

In one or embodiments, the one of or both the first curved glass substrate (or the first glass substrate used to form the first curved glass substrate) and the second curved glass substrate (or the second glass substrate used to form the second curved glass substrate) exhibits an average transmittance in the range from about 75% to about 85%, at a thickness of 0.7 mm or 1 mm, over a wavelength range from about 380 nm to about 780 nm. In some embodiments, the average transmittance at this thickness and over this wavelength range may be in a range from about 75% to about 84%, from about 75% to about 83%, from about 75% to about 82%, from about 75% to about 81%, from about 75% to about 80%, from about 76% to about 85%, from about 77% to about 85%, from about 78% to about 85%, from about 79% to about 85%, or from about 80% to about 85%. In one or more embodiments, the one of or both the first curved glass substrate (or the first glass substrate used to form the first curved glass substrate) and the second curved glass substrate (or the second glass substrate used to form the second curved glass substrate) exhibits Tᵤᵥ₋₃₈₀ or Tᵤᵥ₋₄₀₀ of 50% or less (e.g., 49% or less, 48% or less, 45% or less, 40% or less, 30% or less, 25% or less, 23% or less, 20% or less, or 15% or less), at a thickness of 0.7 mm or 1 mm, over a wavelength range from about 300 nm to about 400 nm.

In one or more embodiments, the one of or both the first curved glass substrate (or the first glass substrate used to form the first curved glass substrate) and the second curved glass substrate (or the second glass substrate used to form the second curved glass substrate) may be strengthened to include compressive stress that extends from a surface to a depth of compression (DOC). The compressive stress regions are balanced by a central portion exhibiting a tensile stress. At the DOC, the stress crosses from a positive (compressive) stress to a negative (tensile) stress.

In one or more embodiments, such strengthened glass substrates may be chemically strengthened, mechanically strengthened or thermally strengthened. In some embodiments, the strengthened glass substrate may be chemically and mechanically strengthened, mechanically and thermally strengthened, chemically and thermally strengthened or chemically, mechanically and thermally strengthened. In one or more specific embodiments, the second curved glass substrate (or the second glass substrate used to form the second curved glass substrate) is strengthened and the first curved glass substrate (or the first glass substrate used to form the first curved glass substrate) is unstrengthened but optionally annealed. In one or more embodiments, the first curved glass substrate (or the first glass substrate used to form the first curved glass substrate) is strengthened. In specific embodiments, both the first curved glass substrate (or the first glass substrate used to form the first curved glass substrate) and the second curved glass substrate (or the second glass substrate used to form the second curved glass substrate) are strengthened. In one or more embodiments, where one or both the glass substrates are chemically and/or thermally strengthened, such chemical and/or thermal strengthening is performed on the curved glass substrate (i.e., after shaping). In some embodiments, such glass substrates may be optionally mechanically strengthened before shaping. In one or more embodiments, where one or both the glass substrates are mechanically strengthened (and optionally combined with one or more other strengthening methods), such mechanical strengthening occurs before shaping.

In one or more embodiments, the one of or both the first curved glass substrate (or the first glass substrate used to form the first curved glass substrate) and the second curved glass substrate (or the second glass substrate used to form the second curved glass substrate) may be strengthened mechanically by utilizing a mismatch of the coefficient of thermal expansion between portions of the article to create a compressive stress region and a central region exhibiting a tensile stress. The DOC in such mechanically strengthened substrates is typically the thickness of the outer portions of the glass substrate having one coefficient of thermal expansion (i.e., the point at which the glass substrate coefficient of thermal expansion changes from one to another value).

In some embodiments, the one of or both the first curved glass substrate (or the first glass substrate used to form the first curved glass substrate) and the second curved glass substrate (or the second glass substrate used to form the second curved glass substrate) may be strengthened thermally by heating the glass substrate to a temperature below the glass transition point and then rapidly thermally quenching, or lowering its temperature. As noted above, in one or more embodiments, where one or both the glass substrates are thermally strengthened, such thermal strengthening is performed on the curved glass substrate (i.e., after shaping).

In one or more embodiments, the one of or both the first curved glass substrate (or the first glass substrate used to form the first curved glass substrate) and the second curved glass substrate (or the second glass substrate used to form the second curved glass substrate) may be chemically strengthening by ion exchange. As noted above, in one or more embodiments, where one or both the glass substrates are chemically strengthened, such chemical strengthening is performed on the curved glass substrate (i.e., after shaping). In the ion exchange process, ions at or near the surface of the glass substrate are replaced by - or exchanged with - larger ions having the same valence or oxidation state. In those embodiments in which the glass substrate comprises a composition including at least one alkali metal oxide as measured on an oxide basis (e.g., Li₂O , Na₂O, K₂O, Rb₂O, or Cs₂O), ions in the surface layer of the article and the larger ions are monovalent alkali metal cations, such as Li⁺, Na⁺, K⁺, Rb⁺, and Cs⁺. Alternatively, monovalent cations in the surface layer may be replaced with monovalent cations other than alkali metal cations, such as Ag⁺ or the like. In such embodiments, the monovalent ions (or cations) exchanged into the glass substrate generate a compressive stress on the surface portions, balanced by a tensile stress in the central portions.

Ion exchange processes are typically carried out by immersing a glass substrate in a molten salt bath (or two or more molten salt baths) containing the larger ions to be exchanged with the smaller ions in the glass substrate. It should be noted that aqueous salt baths may also be utilized. In addition, the composition of the bath(s) may include more than one type of larger ion (e.g., Na+ and K+) or a single larger ion. It will be appreciated by those skilled in the art that parameters for the ion exchange process, including, but not limited to, bath composition and temperature, immersion time, the number of immersions of the glass substrate in a salt bath (or baths), use of multiple salt baths, additional steps such as annealing, washing, and the like, are generally determined by the composition of the glass substrate (including the structure of the article and any crystalline phases present) and the desired DOC and CS of the glass substrate that results from strengthening. Exemplary molten bath composition may include nitrates, sulfates, and chlorides of the larger alkali metal ion. Typical nitrates include KNO₃, NaNO₃, LiNO₃, NaSO₄ and combinations thereof. The temperature of the molten salt bath typically is in a range from about 380°C up to about 450°C, while immersion times range from about 15 minutes up to about 100 hours depending on glass substrate thickness, bath temperature and glass (or monovalent ion) diffusivity. However, temperatures and immersion times different from those described above may also be used.

In one or more embodiments, the glass substrate may be immersed in a molten salt bath of 100% NaNO₃, 100% KNO₃, or a combination of NaNO₃ and KNO₃ having a temperature from about 370 °C to about 480 °C. In some embodiments, the glass substrate may be immersed in a molten mixed salt bath including from about 5% to about 90% KNO₃ and from about 10% to about 95% NaNO₃. In one or more embodiments, the glass substrate may be immersed in a second bath, after immersion in a first bath. The first and second baths may have different compositions and/or temperatures from one another. The immersion times in the first and second baths may vary. For example, immersion in the first bath may be longer than the immersion in the second bath.

In one or more embodiments, the glass substrate may be immersed in a molten, mixed salt bath including NaNO₃ and KNO₃ (e.g., 49%/51%, 50%/50%, 51%/49%) having a temperature less than about 420 °C (e.g., about 400 °C or about 380 °C). for less than about 5 hours, or even about 4 hours or less.

Ion exchange conditions can be tailored to provide a "spike" or to increase the slope of the stress profile at or near the surface of the resulting glass substrate. The spike may result in a greater surface CS value. This spike can be achieved by single bath or multiple baths, with the bath(s) having a single composition or mixed composition, due to the unique properties of the glass compositions used in the glass substrates described herein.

In one or more embodiments, where more than one monovalent ion is exchanged into the glass substrate, the different monovalent ions may exchange to different depths within the glass substrate (and generate different magnitude stresses within the glass substrate at different depths). The resulting relative depths of the stress-generating ions can be determined and cause different characteristics of the stress profile.

CS is measured using those means known in the art, such as by surface stress meter (FSM) using commercially available instruments such as the FSM-6000, manufactured by Orihara Industrial Co., Ltd. (Japan). Surface stress measurements rely upon the accurate measurement of the stress optical coefficient (SOC), which is related to the birefringence of the glass. SOC in turn is measured by those methods that are known in the art, such as fiber and four-point bend methods, both of which are described in ASTM standard C770-98 (2013), entitled "Standard Test Method for Measurement of Glass Stress-Optical Coefficient," the contents of which are incorporated herein by reference in their entirety, and a bulk cylinder method. As used herein CS may be the "maximum compressive stress" which is the highest compressive stress value measured within the compressive stress layer. In some embodiments, the maximum compressive stress is located at the surface of the glass substrate. In other embodiments, the maximum compressive stress may occur at a depth below the surface, giving the compressive profile the appearance of a "buried peak."

DOC may be measured by FSM or by a scattered light polariscope (SCALP) (such as the SCALP-04 scattered light polariscope available from Glasstress Ltd., located in Tallinn Estonia), depending on the strengthening method and conditions. When the glass substrate is chemically strengthened by an ion exchange treatment, FSM or SCALP may be used depending on which ion is exchanged into the glass substrate. Where the stress in the glass substrate is generated by exchanging potassium ions into the glass substrate, FSM is used to measure DOC. Where the stress is generated by exchanging sodium ions into the glass substrate, SCALP is used to measure DOC. Where the stress in the glass substrate is generated by exchanging both potassium and sodium ions into the glass, the DOC is measured by SCALP, since it is believed the exchange depth of sodium indicates the DOC and the exchange depth of potassium ions indicates a change in the magnitude of the compressive stress (but not the change in stress from compressive to tensile); the exchange depth of potassium ions in such glass substrates is measured by FSM. Central tension or CT is the maximum tensile stress and is measured by SCALP.

In one or more embodiments, the first curved glass substrate (or the first glass substrate used to form the first curved glass substrate) and the second curved glass substrate (or the second glass substrate used to form the second curved glass substrate) may be strengthened to exhibit a DOC that is described a fraction of the thickness t of the glass substrate (as described herein). For example, in one or more embodiments, the DOC may be equal to or greater than about 0.03t, equal to or greater than about 0.035t, equal to or greater than about 0.04t, equal to or greater than about 0.045t, equal to or greater than about 0.05t, equal to or greater than about 0. 1t, equal to or greater than about 0. 11t, equal to or greater than about 0.12t, equal to or greater than about 0.13t, equal to or greater than about 0.14t, equal to or greater than about 0.15t, equal to or greater than about 0.16t, equal to or greater than about 0.17t, equal to or greater than about 0.18t, equal to or greater than about 0.19t, equal to or greater than about 0.2t, equal to or greater than about 0.21t. In some embodiments, The DOC may be in a range from about 0.03t to about 0.25t, from about 0.04t to about 0.25 t, from about 0.05t to about 0.25 t, from about 0.06t to about 0.25 t, from about 0.07t to about 0.25 t, from about 0.08t to about 0.25t, from about 0.09t to about 0.25t, from about 0.18t to about 0.25t, from about 0.11t to about 0.25t, from about 0.12t to about 0.25t, from about 0.13t to about 0.25t, from about 0.14t to about 0.25t, from about 0.15t to about 0.25t, from about 0.08t to about 0.24t, from about 0.08t to about 0.23t, from about 0.08t to about 0.22t, from about 0.08t to about 0.21t, from about 0.08t to about 0.2t, from about 0.08t to about 0.19t, from about 0.08t to about 0.18t, from about 0.08t to about 0.17t, from about 0.08t to about 0.16t, or from about 0.08t to about 0.15t. In some instances, the DOC may be about 20 µm or less. In one or more embodiments, the DOC may be about 40 µm or greater (e.g., from about 40 µm to about 300 µm, from about 50 µm to about 300 µm, from about 60 µm to about 300 µm, from about 70 µm to about 300 µm, from about 80 µm to about 300 µm, from about 90 µm to about 300 µm, from about 100 µm to about 300 µm, from about 110 µm to about 300 µm, from about 120 µm to about 300 µm, from about 140 µm to about 300 µm, from about 150 µm to about 300 µm, from about 40 µm to about 290 µm, from about 40 µm to about 280 µm, from about 40 µm to about 260 µm, from about 40 µm to about 250 µm, from about 40 µm to about 240 µm, from about 40 µm to about 230 µm, from about 40 µm to about 220 µm, from about 40 µm to about 210 µm, from about 40 µm to about 200 µm, from about 40 µm to about 180 µm, from about 40 µm to about 160 µm, from about 40 µm to about 150 µm, from about 40 µm to about 140 µm, from about 40 µm to about 130 µm, from about 40 µm to about 120 µm, from about 40 µm to about 110 µm, or from about 40 µm to about 100 µm.

In one or more embodiments, the strengthened glass substrate may have a CS (which may be found at the surface or a depth within the glass substrate) of about 100 MPa or greater, about 150 MPa or greater, about 200 MPa or greater, about 300 MPa or greater, about 400 MPa or greater, about 500 MPa or greater, about 600 MPa or greater, about 700 MPa or greater, about 800 MPa or greater, about 900 MPa or greater, about 930 MPa or greater, about 1000 MPa or greater, or about 1050 MPa or greater.

In one or more embodiments, the strengthened glass substrate may have a maximum tensile stress or central tension (CT) of about 20 MPa or greater, about 30 MPa or greater, about 40 MPa or greater, about 45 MPa or greater, about 50 MPa or greater, about 60 MPa or greater, about 70 MPa or greater, about 75 MPa or greater, about 80 MPa or greater, or about 85 MPa or greater. In some embodiments, the maximum tensile stress or central tension (CT) may be in a range from about 40 MPa to about 100 MPa.

In one or more embodiments, the first curved glass substrate (or the first glass substrate used to form the first curved glass substrate) and the second curved glass substrate (or the second glass substrate used to form the second curved glass substrate) comprise one of soda lime silicate glass, an alkali aluminosilicate glass, alkali containing borosilicate glass, alkali aluminophosphosilicate glass, or alkali aluminoborosilicate glass. In one or more embodiments, one of the first curved glass substrate (or the first glass substrate used to form the first curved glass substrate) and the second curved glass substrate (or the second glass substrate used to form the second curved glass substrate) is a soda lime silicate glass, while the other of the first curved glass substrate (or the first glass substrate used to form the first curved glass substrate) and the second curved glass substrate (or the second glass substrate used to form the second curved glass substrate) is an alkali aluminosilicate glass, alkali containing borosilicate glass, alkali aluminophosphosilicate glass, or alkali aluminoborosilicate glass.

In one or more embodiments, the interlayer used herein (e.g., 330) may include a single layer or multiple layers. The interlayer (or layers thereof) may be formed polymers such as polyvinyl butyral (PVB), acoustic PBV (APVB), ionomers, ethylene-vinyl acetate (EVA) and thermoplastic polyurethane (TPU), polyester (PE), polyethylene terephthalate (PET) and the like. The thickness of the interlayer may be in the range from about 0.5 mm to about 2.5 mm, from about 0.8 mm to about 2.5 mm, from about 1 mm to about 2.5 mm or from about 1.5 mm to about 2.5 mm. The interlayer may also have a non-uniform thickness, or wedge shape, from one edge to the other edge of the laminate.

In one more embodiments, the laminate (and/or one of or both the first curved glass substrate and the second curved glass substrate) exhibits a complexly curved shape. As used herein "complex curve" and "complexly curved" mean a non-planar shape having curvature along two orthogonal axes that are different from one another. Examples of complexly curved shapes includes having simple or compound curves, also referred to as non-developable shapes, which include but are not limited to spherical, aspherical, and toroidal. The complexly curved laminates according to embodiments may also include segments or portions of such surfaces, or be comprised of a combination of such curves and surfaces. In one or more embodiments, a laminate may have a compound curve including a major radius and a cross curvature. A complexly curved laminate according to one or more embodiments may have a distinct radius of curvature in two independent directions. According to one or more embodiments, complexly curved laminates may thus be characterized as having "cross curvature," where the laminate is curved along an axis (i.e., a first axis) that is parallel to a given dimension and also curved along an axis (i.e., a second axis) that is perpendicular to the same dimension. The curvature of the laminate can be even more complex when a significant minimum radius is combined with a significant cross curvature, and/or depth of bend. Some laminates may also include bending along axes that are not perpendicular to one another. As a non-limiting example, the complexly-curved laminate may have length and width dimensions of 0.5 m by 1.0 m and a radius of curvature of 2 to 2.5 m along the minor axis, and a radius of curvature of 4 to 5 m along the major axis. In one or more embodiments, the complexly-curved laminate may have a radius of curvature of 5 m or less along at least one axis. In one or more embodiments, the complexly-curved laminate may have a radius of curvature of 5 m or less along at least a first axis and along the second axis that is perpendicular to the first axis. In one or more embodiments, the complexly-curved laminate may have a radius of curvature of 5 m or less along at least a first axis and along the second axis that is not perpendicular to the first axis.

The laminate of any one of the preceding claims, wherein the laminate comprises automotive glazing or architectural glazing.

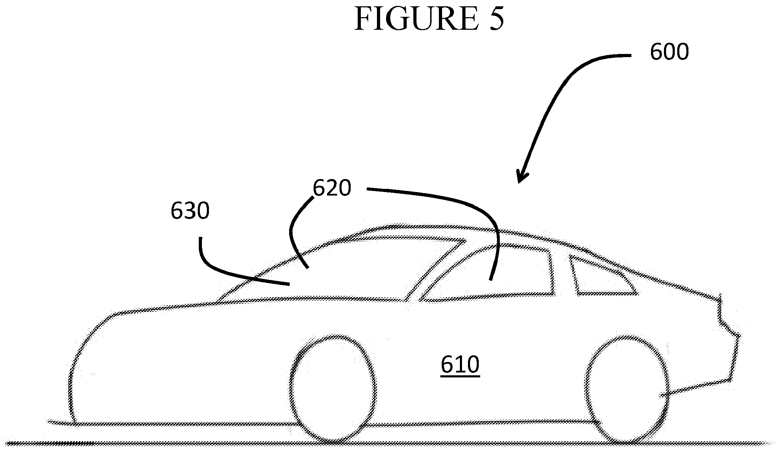

A second aspect of this disclosure pertains to a vehicle that includes a laminate according to one or more embodiments described herein. For example, as shown in Figure 5 shows a vehicle 600 comprising a body 610 defining an interior, at least one opening 620 in communication with the interior, and a glazing disposed in the opening, wherein the window comprises a laminate 630, according to one or more embodiments described herein. In one or more embodiments, the laminate is complexly curved. The laminate 630 may form the sidelights, windshields, rear windows, rearview mirrors, and sunroofs in the vehicle. In some embodiments, the laminate 630 may form an interior partition (not shown) within the interior of the vehicle, or may be disposed on an exterior surface of the vehicle and form an engine block cover, headlight cover, taillight cover, or pillar cover. In one or more embodiments, the vehicle may include an interior surface (not shown, but may include door trim, seat backs, door panels, dashboards, center consoles, floor boards, and pillars), and the laminate or glass article described herein is disposed on the interior surface. In one or more embodiment, the interior surface includes a display and the glass layer is disposed over the display. As used herein, vehicle includes automobiles, motorcycles, rolling stock, locomotive, boats, ships, airplanes, helicopters, drones, space craft and the like.

Another aspect of this disclosure pertains to an architectural application that includes the laminates described herein. In some embodiments, the architectural application includes balustrades, stairs, decorative panels or covering for walls, columns, partitions, elevator cabs, household appliances, windows, furniture, and other applications, formed at least partially using a laminate or glass article according to one or more embodiments.

In one or more embodiments, the laminate is positioned within a vehicle or architectural application such that the second curved glass substrate faces the interior of the vehicle or the interior of a building or room, such that the second curved glass substrate is adjacent to the interior (and the first curved glass substrate is adjacent the exterior). In some embodiments, the second curved glass substrate is in direct contact with the interior (i.e., the fourth surface 324 of the second curved glass substrate glass article facing the interior is bare and is free of any coatings). In one or more embodiments, the first surface 312 of the first curved glass substrate is bare and is free of any coatings. In one or more embodiments, the laminate is positioned within a vehicle or architectural application such that the second curved glass substrate faces the exterior of the vehicle or the exterior of a building or room, such that the second first curved glass substrate is adjacent to the exterior (and the first curved glass substrate is adjacent the interior). In some embodiments, the second curved glass substrate of the laminate is in direct contact with the exterior (i.e., the surface of the second curved glass substrate facing the exterior is bare and is free of any coatings).

In one or more embodiments, referring to Figure 3, both the first surface 312 and the fourth surface 324 is bare and substantially free of any coatings. In some embodiment one or both the edge portions of the first surface 312 and the fourth surface 324 may include a coating while the central portions are bare and substantially free of any coatings. Optionally, one or both the first surface 312 and the fourth surface 324 includes a coating or surface treatment (e.g., antireflective coating, anti-glare coating or surface, easy-to-clean surface, ink decoration, conductive coatings etc.). In one or more embodiments, the laminate includes one or more conductive coatings on one of or both the second surface 312 or the third surface 322 adjacent the interlayer 330.

In one or more embodiments, referring to Figure 3A, both the first surface 322 and the fourth surface 314 is bare and substantially free of any coatings. In some embodiment one or both the edge portions of the first surface 322 and the fourth surface 314 may include a coating while the central portions are bare and substantially free of any coatings. Optionally, one or both the first surface 322 and the fourth surface 314 includes a coating or surface treatment (e.g., antireflective coating, anti-glare coating or surface, easy-to-clean surface, ink decoration, conductive coatings etc.). In one or more embodiments, the laminate includes one or more conductive coatings on one of or both the second surface 324 or the third surface 312 adjacent the interlayer 330.

A third aspect of this disclosure pertains to a method of forming a curved laminate, such as the embodiments of the curved laminates described herein. In one or more embodiments, the method includes forming a stack comprising a first glass substrate according to one or more embodiments, and a second glass substrate according to one or more embodiments, and heating the stack and co-shaping the stack to form a co-shaped stack. In one or more embodiments, the second glass substrate is disposed on the first glass substrate to form the stack. In one or more embodiments, the first glass substrate is disposed on the second glass substrate to form the stack.

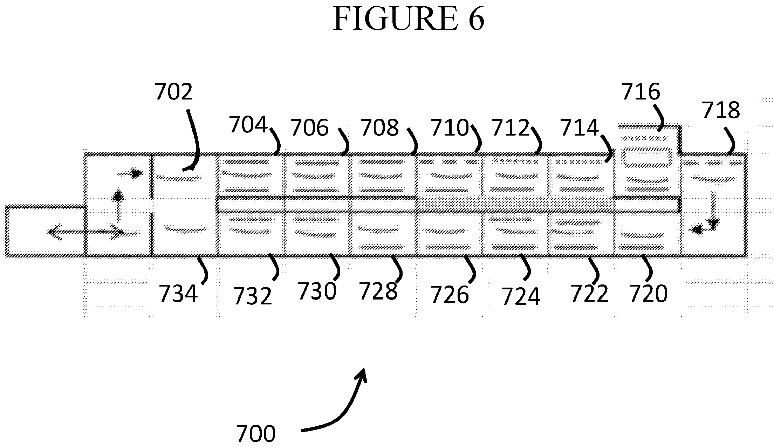

Heating the stack may include placing the stack in a dynamic furnace such as a lehr furnace or a static furnace. An example of a lehr furnace 700 is shown in Figure 6. In a dynamic furnace such as a lehr furnace, the stack is introduced in a first module 702 and then conveyed through a series of modules 702, 704, 706, 708, 710, 712, having sequentially increasing temperatures until reaching a maximum temperature in module 714. This maximum temperature is referred to as the set point of the furnace. In module 716, the stack is co-shaped. In some embodiments, heat is applied in module 716, but may not be required. The stack is then conveyed through module 718 to a series of modules 720, 722, 724, 726, 728, 730, 732 with sequentially decreasing temperature that permit gradual cooling of the stack until it reaches module 734. The duration of time for which the stack is present in each module is also specified (e.g., in a range from about 30 seconds to 500 seconds). In one or more embodiments, module 704 is controlled to have a temperature in a range from about 225 °C to about 275 °C, module 706 is controlled to have a temperature in a range from about 400 °C to about 460 °C, module 708 is controlled to have a temperature in a range from about 530 °C to about 590 °C, module 710 is controlled to have a temperature in a range from about 580 °C to about 640 °C, module 712 is controlled to have a temperature in a range from about 590 °C to about 650 °C, and module 714 is controlled to have a temperature in a range from about 600 °C to about 680 °C. In typical furnaces, the temperature of the glass substrates is less than the temperature at which the module is controlled. For example, the difference between the glass substrate temperature and the controlled module temperature may be in a range from about 10 ° C to 20° C.

In one or more embodiments, the stack comprises opposing major surfaces each comprising a central portion and an edge portion surrounding the central portion. In one or more embodiments, the co-shaped stack includes a first curved glass substrate having a first sag depth and a second curved glass substrate each having a second sag depth, wherein the first sag depth and the second sag depth are greater than 2 mm and within 10% of one another.

In one or more embodiments, the first glass substrate (prior to heating and co-shaping) includes a first viscosity (poises) and a first sag temperature and the second glass substrate includes a second viscosity that greater than or equal to 10 times the first viscosity and a second sag temperature that differs from the first sag temperature by about 30 °C or more (e.g., 35 °C or more, 40 °C or more, 45 °C or more, 50 °C or more, 55 °C or more, or 60 °C or more).

In one or more embodiments, heating the stack comprises heating the stack to a temperature different from the first sag temperature and the second sag temperature. In some embodiments, heating the stack comprises heating the stack to a temperature between the first sag temperature and the second sag temperature (e.g., from about 630 °C to about 665 °C, from about 630 °C to about 660 °C, from about 630 °C to about 655 °C, from about 630 °C to about 650 °C, from about 630 °C to about 645 °C, from about 635 °C to about 665 °C, from about 640 °C to about 665 °C, from about 645 °C to about 665 °C, or from about 650 °C to about 665 °C). In one or more specific embodiments, heating the stack comprises heating the stack to the first sag temperature or to the second sag temperature.

In one or more embodiments of the method, the first sag depth and/or the second sag depth is in a range from about 6 mm to about 25 mm. For example, one or both the first sag depth and the second sag depth may be in a range from about 2 mm to about 25 mm, from about 4 mm to about 25 mm, from about 5 mm to about 25 mm, from about 6 mm to about 25 mm, from about 8 mm to about 25 mm, from about 10 mm to about 25 mm, from about 12 mm to about 25 mm, from about 14 mm to about 25 mm, from about 15 mm to about 25 mm, from about 2 mm to about 24 mm, from about 2 mm to about 22 mm, from about 2 mm to about 20 mm, from about 2 mm to about 18 mm, from about 2 mm to about 16 mm, from about 2 mm to about 15 mm, from about 2 mm to about 14 mm, from about 2 mm to about 12 mm, from about 2 mm to about 10 mm, from about 2 mm to about 8 mm, from about 6 mm to about 20 mm, from about 8 mm to about 18 mm, from about 10 mm to about 15 mm, from about 12 mm to about 22 mm, from about 15 mm to about 25 mm, or from about 18 mm to about 22 mm.

In one or more embodiments, the method includes positioning or placing the stack on a female mold and heating the stack as it is positioned on the female mold. In some embodiments, co-shaping the stack includes sagging the stack using gravity through an opening in the female mold. As used herein, term such as "sag depth" refer to shaping depth achieved by sagging or other co-shaping process.

In one or more embodiments, the method includes applying a male mold to the stack. In some embodiments, the male mold is applied while the stack is positioned or placed on a female mold.

In one or more embodiments, the method includes applying a vacuum to the stack to facilitate co-shaping the stack. In some embodiments, the vacuum is applied while the stack is positioned or placed on a female mold.

In one or more embodiments, the method includes heating the stack at a constant temperature while varying the duration of heating until the co-shaped stack is formed. As used herein, constant temperature means a temperature that is ±3 °C from a target temperature, ±2 °C from a target temperature, or ±1 °C from a target temperature.

In one or more embodiments, the method includes heating the stack for a constant duration, while varying the temperature of heating until the co-shaped stack is formed. As used herein, constant duration means a duration that is ±10 seconds from a target duration, ±7 seconds from a target duration, ±5 seconds from a target duration, or ±3 seconds from a target duration.

In one or more embodiments, the method includes co-shaping the stack by heating the stack at a constant temperature (as defined herein) during co-shaping. In one or more embodiments, the method includes co-shaping the stack by heating the stack at a constantly increasing temperature during co-shaping. As used herein, the term constantly increasing may include a linearly increasing temperature or a temperature that increases stepwise in regular or irregular intervals.

In one or more embodiments, the method includes generating a temperature gradient in the stack between the central portion and the edge portion of the stack. In some instances, generating a temperature gradient comprises applying heat unevenly to the central portion and the edge portion. In some embodiments, more heat is applied to the central portion than is applied to the edge portion. In other embodiments, more heat is applied to the edge portion than is applied to the central portion. In some embodiments, generating a temperature gradient comprises reducing the heat applied to one of the central portion and the edge portion compared to heat applied to the other of the central portion and the edge portion. In some instances, generating a temperature gradient comprises reducing the heat applied to the central portion compared to the heat applied to the edge portion. In some embodiments, generating a temperature includes reducing the heat applied to the edge portion compared to the heat applied to the central portion. Heat may be reduced to the central portion or edge portion by physical means such as by shielding such portions with a physical barrier or thermal barrier or adding a heat sink to such portions.

In one or more embodiments, the method includes generating an attractive force between the first glass substrate and the second glass substrate. The method includes generating the attractive force while heating the stack and/or while co-shaping the stack. In some embodiments, generating the attractive force includes generating an electrostatic force.

In one or more embodiments, the method includes generating a vacuum between the first glass substrate and the second glass substrate. The method includes generating the vacuum while heating the stack and/or while co-shaping the stack. In some embodiments, generating the vacuum includes heating both the stack whereby one of the first glass substrate and the second substrate (whichever is positioned below the other in the stack) begins to curve before the other of the first glass substrate and the second glass substrate. This curving of one of the first glass substrate and the second glass substrate creates a vacuum between the first glass substrate and the second glass substrate. This vacuum causes the glass substrate that does not curve first (i.e., the glass substrate that does not curve while the other glass substrate begins to sag) to begin to curve with the other glass substrate. In one or more embodiments, the method includes creating and maintaining contact between the respective peripheral portions (315, 325) of the first glass substrate and the second substrate to generate and/or maintain the vacuum between the glass substrates. In one or more embodiments, the contact is maintained along the entire peripheral portions (315, 325). In one or more embodiments, the contact is maintained until the sag depth is achieved in one or both of the first glass substrate and the second glass substrate.

In one or more embodiments, the method includes forming a temporary bond between the first glass substrate and the second glass substrate. In some embodiments, the temporary bond may include an electrostatic force or may include a vacuum force (which may be characterized as an air film between glass substrates). The method includes forming the temporary bond while heating the stack and/or while co-shaping the stack. As used herein, the phrase "temporary bond" refers to a bond that can be overcome by hand or using equipment known in the art for separating co-shaped glass substrates (which do not include an interlayer therebetween).

In one or more embodiments, the method includes preventing wrinkling at the peripheral portions (315, 325) of the first glass substrate and the second glass substrate. In one or more embodiments, preventing wrinkling includes shielding at least a portion or the entire peripheral portions (315, 325) of the first and second glass substrates from the heat the stack during bending.

In one or more embodiments, the method may include placing separation powder between the first glass sheet and the second glass sheet before heating and co-shaping. In particular, embodiments include methods for using placing a separation powder between the first and second glass sheets in such a way as to prevent bending dot defects. As discussed above, prior art solutions to prevent bending dot defects in an asymmetric laminate consisting of a 2.1 mm ply and a 1.1 mm ply include inverting the usual asymmetrical pairing order while forming or co-sagging. In other words, the thicker glass play is placed on top of the thinner glass ply. However, embodiments of the present disclosure are applicable to various types of asymmetric laminates, including those with greater thickness asymmetries (e.g., 2.1 mm ply thickness with 0.55 mm ply thickness), and plies with different compositions or viscosities. To achieve these solutions, embodiments of this disclosure use a specific disposition of separation powder between the plies during co-sagging.

An aspect of one or more embodiments is using a relatively thick layer of the separation powder to prevent the bending dot defect and achieve good shape match of the plies. The solution of putting a thicker layer of separation powder may be considered unintuitive, because it is believed that increased pressure between the edges of the plies creates bending dots defects and a thicker separation powder layer may further increase the contact pressure. However, Applicant has found that the thicker layer of separation powder leads to unexpectedly superior results when compared with the conventional methods. In addition, not only is the thickness of the separation powder an aspect of embodiments, but also a disposition or location of the separation powder relative to the glass plies. Indeed, Applicant has found that putting a thicker layer of separation powder in the center of the plies does not necessarily improve bending dot defects. Instead, Applicant has found that the increased thickness of separation powder can be confined to certain areas of the glass ply surface. As a result, the total amount of separation powder used may actually decrease. A material for the separation material can include, for example, calcium carbonate.

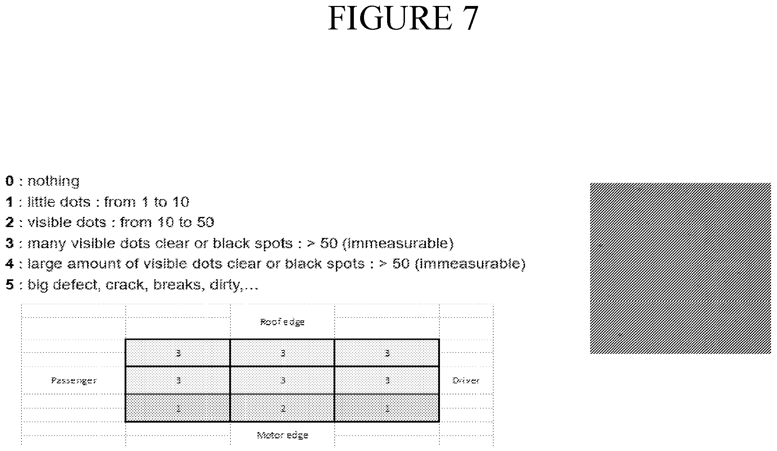

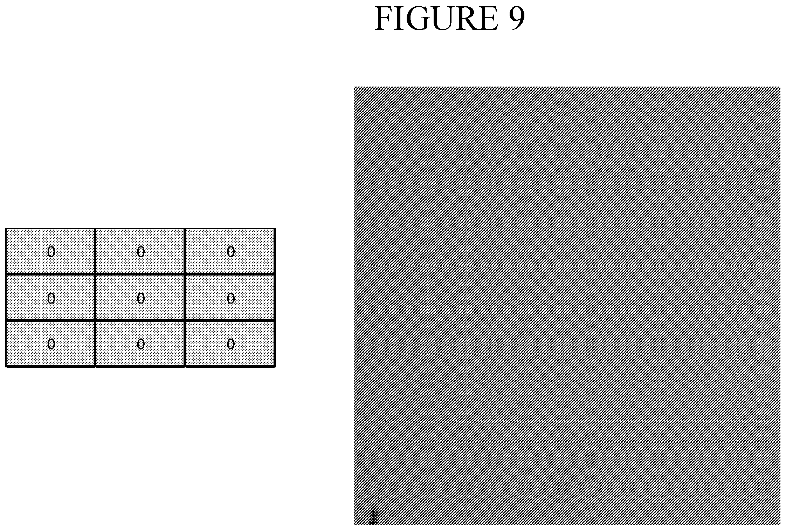

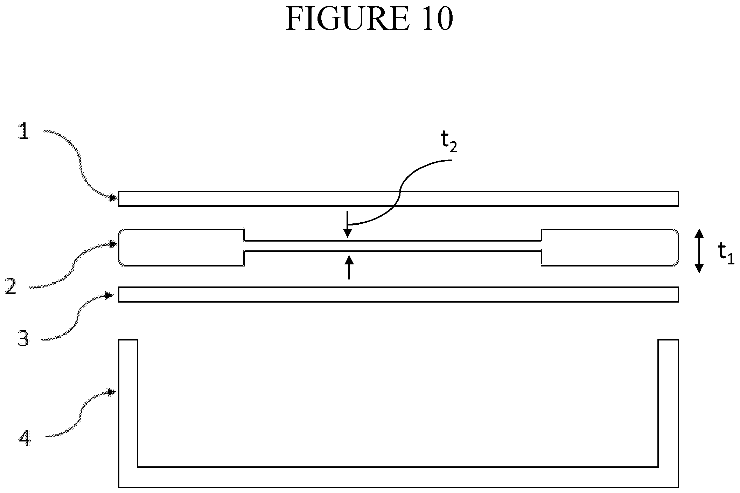

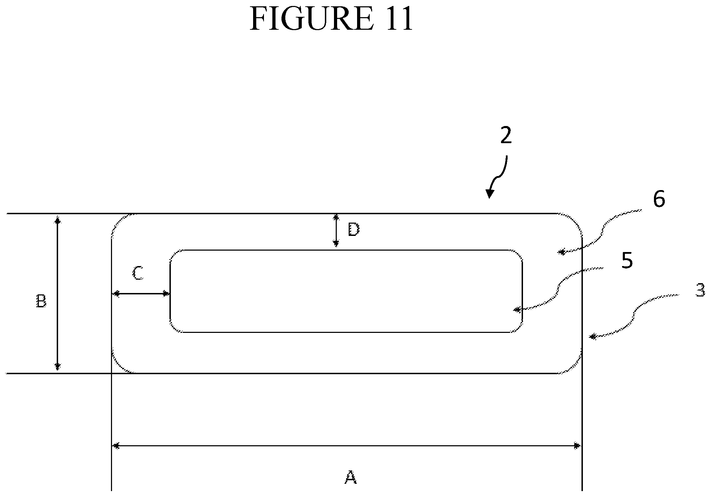

Figure 7 shows an image of a glass after bending to illustrate the presence of bending dots. The chart uses "0" to indicate no defects, "1" to indicate little dots (from 1 to 10), "2" to indicate visible dots (from 10 to 50), "3" to indicate many visible dots or clear black spots (> 50 or immeasureable), and "4" to indicate a large number of visible dots or black spots, and "5" to indicate big defects, cracks, or breaks. From Figure 7, it can be seen that many dots were visible across the surface of the glass. In comparison, Figures 8 and 9 show embodiments according to the present disclosure. In Figure 8, much fewer dots and of less severity were visible. The result of Figure 8 was achieved using a high separation powder thickness just in the center of the glass. In Figure 9, no dots were visible after using the separation powder disposition shown in Figures 10 and 11.

Figure 10 shows a cross-section view of bending ring 4 on which a first glass ply 3 and a second glass ply 1 are to be co-sagged. A separation media 2 is disposed between the first glass ply 3 and the second glass ply 1. A thickness of the separation media varies across the surface of the first glass ply 3. In particular, the separation media has a thickness ti near an edge of the glass ply 3, and a thickness t₂ near the center of the glass ply 3, wherein t₂ < ti. In one or more particular embodiments, t₂ = 1.5 × ti or more, t₂ = 2 × ti or more, t₂ = 2.5 × ti or more, t₂ = 3 × ti or more, or t₂ = 4 × ti or more. In one particular embodiment, t₂ = 3 × ti. Figure 11 shows, in plan view, the same disposition of separation media 2 on top of a glass ply 3. The separation media 2 includes a first region 5 in the center of the glass ply 3, and a second region 6 near an edge of the glass ply 3. The length of the glass ply 3 and the separation powder 2 is "A", and a width is given by "B." A difference in length between the second region 6 and the first region 5 is twice the distance of "C", and a difference in width is twice the distance of "D." Moreover, in one or more embodiments, C = A / 4, and D = B / 4.

The process for producing asymmetric glass laminates or laminates of differing viscosity plies without bending dot defects is a multi-step process as described below. First, a preform may be cut from flat glass sheets of the desired thicknesses. The shape of this sheet is defined by the flat pattern needed to produce the desired shape after bending. After the preforms are cut to size, the edges may be ground to break the sharp corners and achieve a desired edge profile. After edge grinding, the preforms may then be formed. Forming may be done in a lehr furnace with zoned heating and cooling areas. The glass plies that will make up the laminate are to be pair sagged to minimize shape deviations between the plies that may lead to optical distortions or low yields during lamination. The asymmetric glass plies are to be prepared with the thin ply 1 atop of the thick ply 3 with a separation media 2 between, as shown in Figure 10. This preparation applied according to the disposition described above with reference to Figures 10 and 11.

The separation media was applied with the brush but every other method of powder application on the glass will give the same result. This separation media may be, but is not limited to, hexagonal BN, ISP-1, flame deposited carbon, or CaCO3. The powdering process used three times the amount of powder in the periphery or second region 6 and normal powdering in the center or first region 5. As a result, bending dot defects are prevented forming. This asymmetric stack is placed on a bending ring 4 to be processed through the lehr furnace. The bending ring supports the glass only on a thin band near the perimeter. The furnace parameters will be predefined by a recipe that produces the desired sag depth and shape. When the bending ring 4 and asymmetric glass stack exits the furnace, the glass should be fully formed to the desired shape. This glass stack is then removed from the bending ring and cleaned before it proceeds to the lamination steps. Shape mismatch between plies should be observed to be minimal and bending dot defects should not exist. The plies are to be laminated in the same stack order as they were formed being separated by a layer of PVB. This stack up will be tacked together then permanently bonded in an autoclave to form the final asymmetric laminate.

In some embodiments, the method includes inserting an interlayer between the first curved glass substrate and the second curved glass substrate, and laminating the first curved glass substrate, the interlayer, and the second curved glass substrate together.

According to an aspect (1) of the present disclosure, a laminate is provided. The laminate comprises: a first curved glass substrate comprising a first major surface, a second major surface opposing the first major surface, a first thickness defined as the distance between the first major surface and second major surface, and a first sag depth of about 2 mm or greater; a second curved glass substrate comprising a third major surface, a fourth major surface opposing the third major surface, a second thickness defined as the distance between the third major surface and the fourth major surface, and a second sag depth of about 2 mm or greater; and an interlayer disposed between the first curved glass substrate and the second curved glass substrate and adjacent the second major surface and third major surface, wherein the first sag depth is within 10% of the second sag depth and a shape deviation between the first glass substrate and the second glass substrate of ± 5 mm or less as measured by an optical three-dimensional scanner, and wherein one of or both the first curved glass and the second curbed glass have no visible bending dot defects.

According to an aspect (2) of the present disclosure, the laminate of aspect (1) is provided, wherein the first curved glass substrate comprising a first viscosity (poises) at a temperature of 630 °C, the second curved glass substrate comprising a second viscosity that is greater than the first viscosity at a temperature of 630 °C.

According to an aspect (3) of the present disclosure, the laminate of aspect (1) is provided, wherein, at a temperature of about 630 °C, the second viscosity is in a range from about 10 times the first viscosity to about 750 times the first viscosity.

According to an aspect (4) of the present disclosure, the laminate of any of aspects (1)-(3) is provided, wherein the second thickness is less than the first thickness.

According to an aspect (5) of the present disclosure, the laminate of any of aspects (1)-(4) is provided, wherein the first thickness is from about 1.6 mm to about 3 mm, and the second thickness is in a range from about 0.1 mm to less than about 1.6 mm.

According to an aspect (6) of the present disclosure, the laminate of any of aspects (1)-(5) is provided, wherein the first curved substrate comprises a first sag temperature and the second curved glass substrate comprises a second sag temperature that differs from the first sag temperature.

According to an aspect (7) of the present disclosure, the laminate of aspect (6) is provided, wherein the difference between the first sag temperature and the second sag temperature is in a range from about 5 °C to about 150 °C.

According to an aspect (8) of the present disclosure, the laminate of any of aspects (1)-(7) is provided, wherein the shape deviation is about ± 1 mm or less.

According to an aspect (9) of the present disclosure, the laminate of any of aspects (1)-(8) is provided, wherein the shape deviation is about ± 0.5 mm or less.

According to an aspect (10) of the present disclosure, the laminate of any of aspects (1)-(9) is provided, wherein the optical distortion is about 100 millidiopters or less.

According to an aspect (11) of the present disclosure, the laminate of any of aspects (1)-(10) is provided, wherein the membrane tensile stress is about 5 MPa or less.

According to an aspect (12) of the present disclosure, the laminate of any of aspects (1)-(11) is provided, wherein the second sag depth is in a range from about 5 mm to about 30 mm.

According to an aspect (13) of the present disclosure, the laminate of any of aspects (1)-(12) is provided, wherein the first major surface or the second major surface comprises a surface compressive stress of less than 3 MPa as measured by a surface stress meter.

According to an aspect (14) of the present disclosure, the laminate of any of aspects (1)-(13) is provided, wherein the laminate is substantially free of visual distortion as measured by ASTM C1652/C1652M.

According to an aspect (15) of the present disclosure, the laminate of any of aspects (1)-(14) is provided, wherein the second curved glass substrate is strengthened.

According to an aspect (16) of the present disclosure, the laminate of aspect (15) is provided, wherein the second curved glass substrate is chemically strengthened, mechanically strengthened or thermally strengthened.

According to an aspect (17) of the present disclosure, the laminate of any of aspects (15)-(16) is provided, wherein the first glass curved substrate is unstrengthened.

According to an aspect (18) of the present disclosure, the laminate of any of aspects (15)-(16) is provided, wherein the first curved glass substrate is strengthened.

According to an aspect (19) of the present disclosure, the laminate of any of aspects (1)-(18) is provided, wherein the first curved glass substrate comprises a soda lime silicate glass.

According to an aspect (20) of the present disclosure, the laminate of any of aspects (1)-(19) is provided, wherein the first curved glass substrate comprises an alkali aluminosilicate glass, alkali containing borosilicate glass, alkali aluminophosphosilicate glass, or alkali aluminoborosilicate glass.

According to an aspect (21) of the present disclosure, the laminate of any of aspects (1)-(20) is provided, wherein the first curved glass substrate comprises a first length and a first width, either one of or both the first length and the first width is about 0.25 meters or greater.

According to an aspect (22) of the present disclosure, the laminate of any of aspects (1)-(21) is provided, wherein the first curved glass substrate comprises a first length, and a first width, and the second curved glass substrate comprises a second length that is within 5% of the first length, and a second width that is within 5% of the first width.

According to an aspect (23) of the present disclosure, the laminate of any of aspects (1)-(22) is provided, wherein the laminate is complexly curved.

According to an aspect (24) of the present disclosure, the laminate of any of aspects (1)-(23) is provided, wherein the laminate comprises automotive glazing or architectural glazing.

According to an aspect (25) of the present disclosure, a vehicle is provided. The vehicle comprises: a body defining an interior and an opening in communication with the interior; a laminate according to any one of aspects (1)-(24) disposed in the opening.

According to an aspect (26) of the present disclosure, a method of forming a curved laminate is provided. The method comprises: providing a first glass substrate comprising a first major surface, a second major surface opposite the first major surface, a first viscosity (poises), a first sag temperature, and a first thickness; disposing separation media on top of the first glass substrate on the second major surface, the separation media being disposed in a predetermined pattern; providing a second glass substrate comprising a third major surface, a fourth major surface, a second viscosity, a second sag temperature, and a second thickness; forming a stack comprising the first and second glass substrates with the separation media disposed therebetween; and heating the stack and co-shaping the stack to form a co-shaped stack, the co-shaped stack comprising a first curved glass substrate having a first sag depth and a second curved glass substrate each having a second sag depth, wherein at least one of the second viscosity, the second sag temperature, and the second thickness is greater than the respective first viscosity the first sag temperature, and the first thickness, and wherein the predetermined pattern comprises a first region of separation media on the second major surface and a second region of separation media on the second major surface, the second region being closer to an edge of the second major surface than the first region, where a second thickness of the separation media in the second region is greater than a first thickness of the separation media in the first region.

According to aspect (27) of the present disclosure, the method of aspect (26) is provided, wherein the second thickness is about 1.5 × the first thickness or more, about 2 × the first thickness or more, about 3 × the first thickness or more, about 3.5 × the first thickness or more, or about 4 × the first thickness.

According to aspect (28) of the present disclosure, the method of any one of aspects (26)-(27) is provided, wherein the co-shaped stack does not exhibit any visual bending dot defects on either the first curved glass substrate or the second curved glass substrate.

According to aspect (29) of the present disclosure, the method of any one of aspects (26)-(28) is provided, wherein the first sag depth and the second sag depth are greater than 2 mm and within 10% of one another.

According to aspect (30) of the present disclosure, the method of any one of aspects (26)-(29) is provided, wherein heating the stack comprises heating the stack to a temperature different from the first sag temperature and the second sag temperature.

According to aspect (31) of the present disclosure, the method of any one of aspects (26)-(30) is provided, wherein heating the stack comprises heating the stack to a temperature between the first sag temperature and the second sag temperature.

According to aspect (32) of the present disclosure, the method of any one of aspects (26)-(31) is provided, wherein heating the stack comprises heating the stack to the first sag temperature.

According to aspect (33) of the present disclosure, the method of any one of aspects (26)-(32) is provided, wherein heating the stack comprises heating the stack to the second sag temperature.

According to aspect (34) of the present disclosure, the method of any one of aspects (26)-(33) is provided, wherein the first sag depth or the second sag depth is in a range from about 6 mm to about 30 mm.

According to aspect (35) of the present disclosure, the method of any one of aspects (26)-(34) is provided, further comprising placing the stack on a female mold and heating the stack on the female mold.

According to aspect (36) of the present disclosure, the method of aspect (35) is provided, wherein co-shaping the stack comprises sagging the stack using gravity through an opening in the female mold.

According to aspect (37) of the present disclosure, the method of any one of aspects (35)-(36) is provided, further comprising applying a male mold to the stack.

According to aspect (38) of the present disclosure, the method of any one of aspects (35)-(36) is provided, further comprising applying a vacuum to the stack to facilitate co-shaping the stack.

According to an aspect (39) of the present disclosure, a laminate is provided that comprises: a first curved glass substrate comprising a first major surface, a second major surface opposing the first major surface, a first thickness defined as the distance between the first major surface and second major surface, and a first sag depth of about 2 mm or greater; a second curved glass substrate comprising a third major surface, a fourth major surface opposing the third major surface, a second thickness defined as the distance between the third major surface and the fourth major surface, and a second sag depth of about 2 mm or greater; and an interlayer disposed between the first curved glass substrate and the second curved glass substrate and adjacent the second major surface and third major surface, wherein the first sag depth is within 10% of the second sag depth and a shape deviation between the first glass substrate and the second glass substrate of ± 5 mm or less as measured by an optical three-dimensional scanner, and wherein one of or both the first curved glass and the second curbed glass have no visible bending dot defects.

According to aspect (40) of the present disclosure, the laminate of aspect (39) is provided, wherein the first curved glass substrate comprising a first viscosity (poises) at a temperature of 630 °C and the second curved glass substrate comprises a second viscosity that is greater than the first viscosity at a temperature of 630 °C.

According to aspect (41) of the present disclosure, the laminate of aspect (39) is provided, wherein, at a temperature of about 630 °C, the second viscosity is in a range from about 10 times the first viscosity to about 750 times the first viscosity.

According to aspect (42) of the present disclosure, the laminate of any one of aspects (39)-(41) is provided, wherein the second thickness is less than the first thickness.

According to aspect (43) of the present disclosure, the laminate of any one of aspects (39)-(42) is provided, wherein the first thickness is from about 1.6 mm to about 3 mm, and the second thickness is in a range from about 0.1 mm to less than about 1.6 mm.

According to aspect (43) of the present disclosure, the laminate of any one of aspects (39)-(42) is provided, wherein first curved substrate comprises a first sag temperature and the second curved glass substrate comprises a second sag temperature that differs from the first sag temperature.

According to aspect (44) of the present disclosure, the laminate of aspect (43) is provided, wherein the difference between the first sag temperature and the second sag temperature is in a range from about 5 °C to about 150 °C.

According to aspect (45) of the present disclosure, the laminate of any one of aspects (39)-(44) is provided, wherein the shape deviation is about ± 1 mm or less.

According to aspect (46) of the present disclosure, the laminate of any one of aspects (39)-(45) is provided, wherein the shape deviation is about ± 0.5 mm or less.

According to aspect (47) of the present disclosure, the laminate of any one of aspects (39)-(46) is provided, wherein the optical distortion is about 100 millidiopters or less.

According to aspect (48) of the present disclosure, the laminate of any one of aspects (39)-(47) is provided, wherein the membrane tensile stress is about 5 MPa or less.

According to aspect (49) of the present disclosure, the laminate of any one of aspects (39)-(48) is provided, wherein the second sag depth is in a range from about 5 mm to about 30 mm.

According to aspect (50) of the present disclosure, the laminate of any one of aspects (39)-(49) is provided, wherein the first major surface or the second major surface comprises a surface compressive stress of less than 3 MPa as measured by a surface stress meter.

According to aspect (51) of the present disclosure, the laminate of any one of aspects (39)-(50) is provided, wherein the laminate is substantially free of visual distortion as measured by ASTM C1652/C1652M.

According to aspect (52) of the present disclosure, the laminate of any one of aspects (39)-(51) is provided, wherein the second curved glass substrate is strengthened.

According to aspect (53) of the present disclosure, the laminate of aspect (52) is provided, wherein the second curved glass substrate is chemically strengthened, mechanically strengthened or thermally strengthened.

According to aspect (54) of the present disclosure, the laminate of any one of aspects (52)-(53) is provided, wherein the first glass curved substrate is unstrengthened.

According to aspect (55) of the present disclosure, the laminate of any one of aspects (52)-(53) is provided, wherein the first curved glass substrate is strengthened.

According to aspect (56) of the present disclosure, the laminate of any one of aspects (39)-(55) is provided, wherein the first curved glass substrate comprises a soda lime silicate glass.

According to aspect (57) of the present disclosure, the laminate of any one of aspects (39)-(56) is provided, wherein the first curved glass substrate comprises an alkali aluminosilicate glass, alkali containing borosilicate glass, alkali aluminophosphosilicate glass, or alkali aluminoborosilicate glass.

According to aspect (58) of the present disclosure, the laminate of any one of aspects (39)-(57) is provided, wherein the first curved glass substrate comprises a first length and a first width, either one of or both the first length and the first width is about 0.25 meters or greater.

According to aspect (59) of the present disclosure, the laminate of any one of aspects (39)-(58) is provided, wherein the first curved glass substrate comprises a first length, and a first width, and the second curved glass substrate comprises a second length that is within 5% of the first length, and a second width that is within 5% of the first width.

According to aspect (60) of the present disclosure, the laminate of any one of aspects (39)-(59) is provided, where the laminate is complexly curved.

According to aspect (61) of the present disclosure, the laminate of any one of aspects (39)-(60) is provided, wherein the laminate comprises automotive glazing or architectural glazing.

According to an aspect (62) of the present disclosure, a vehicle is provided that comprises: a body defining an interior and an opening in communication with the interior; a laminate according to any one of the aspects (39)-(61) disposed in the opening.

According to an aspect (63) of the present disclosure, a method of forming a curved laminate is provided that comprises: providing a first glass substrate comprising a first major surface, a second major surface opposite the first major surface, a first viscosity (poises), a first sag temperature, and a first thickness; disposing separation media on top of the first glass substrate on the second major surface, the separation media being disposed in a predetermined pattern; providing a second glass substrate comprising a third major surface, a fourth major surface, a second viscosity, a second sag temperature, and a second thickness; forming a stack comprising the first and second glass substrates with the separation media disposed therebetween; and heating the stack and co-shaping the stack to form a co-shaped stack, the co-shaped stack comprising a first curved glass substrate having a first sag depth and a second curved glass substrate each having a second sag depth, wherein at least one of the second viscosity, the second sag temperature, and the second thickness is greater than the respective first viscosity the first sag temperature, and the first thickness, and wherein the predetermined pattern comprises a first region of separation media on the second major surface and a second region of separation media on the second major surface, the second region being closer to an edge of the second major surface than the first region, where a second thickness of the separation media in the second region is greater than a first thickness of the separation media in the first region.

According to aspect (64) of the present disclosure, the method of aspect (63) is provided, wherein the second thickness is about 1.5 × the first thickness or more, about 2 × the first thickness or more, about 3 × the first thickness or more, about 3.5 × the first thickness or more, or about 4 × the first thickness.

According to aspect (65) of the present disclosure, the method of any one of aspects (63)-(64) is provided, wherein the co-shaped stack does not exhibit any visual bending dot defects on either the first curved glass substrate or the second curved glass substrate.

According to aspect (66) of the present disclosure, the method of any one of aspects (63)-(65) is provided, wherein the first sag depth and the second sag depth are greater than 2 mm and within 10% of one another.

According to aspect (67) of the present disclosure, the method of any one of aspects (63)-(66) is provided, wherein heating the stack comprises heating the stack to a temperature different from the first sag temperature and the second sag temperature.

According to aspect (68) of the present disclosure, the method of any one of aspects (63)-(67) is provided, wherein heating the stack comprises heating the stack to a temperature between the first sag temperature and the second sag temperature.

According to aspect (69) of the present disclosure, the method of any one of aspects (63)-(68) is provided, wherein heating the stack comprises heating the stack to the first sag temperature.

According to aspect (70) of the present disclosure, the method of any one of aspects (63)-(69) is provided, wherein heating the stack comprises heating the stack to the second sag temperature.

According to aspect (71) of the present disclosure, the method of any one of aspects (63)-(70) is provided, wherein the first sag depth or the second sag depth is in a range from about 6 mm to about 30 mm.

According to aspect (72) of the present disclosure, the method of any one of aspects (63)-(71) is provided, further comprising placing the stack on a female mold and heating the stack on the female mold.

According to aspect (73) of the present disclosure, the method of aspect (72) is provided, wherein co-shaping the stack comprises sagging the stack using gravity through an opening in the female mold.

According to aspect (74) of the present disclosure, the method of any one of aspects (72)-(73) is provided, further comprising applying a male mold to the stack.

According to aspect (75) of the present disclosure, the method of any one of aspects (72)-(73) is provided, further comprising applying a vacuum to the stack to facilitate co-shaping the stack.

It will be apparent to those skilled in the art that various modifications and variations can be made without departing from the spirit or scope of the present disclosure.

## Claims

1. A method of forming a curved laminate comprising:
providing a first glass substrate comprising a first major surface, a second major surface opposite the first major surface, a first viscosity (poises), a first sag temperature, and a first thickness;
disposing separation media on top of the first glass substrate on the second major surface, the separation media being disposed in a predetermined pattern;
providing a second glass substrate comprising a third major surface, a fourth major surface, a second viscosity, a second sag temperature, and a second thickness;
forming a stack comprising the first and second glass substrates with the separation media disposed therebetween; and
heating the stack and co-shaping the stack to form a co-shaped stack, the co-shaped stack comprising a first curved glass substrate having a first sag depth and a second curved glass substrate each having a second sag depth,
wherein at least one of the second viscosity, the second sag temperature, and the second thickness is greater than the respective first viscosity the first sag temperature, and the first thickness, and
wherein the predetermined pattern comprises a first region of separation media on the second major surface and a second region of separation media on the second major surface, the second region being closer to an edge of the second major surface than the first region, where a second thickness of the separation media in the second region is greater than a first thickness of the separation media in the first region.

2. The method of claim 1, wherein the second thickness is about 2 × the first thickness or more.

3. The method of any preceding claim, wherein the co-shaped stack does not exhibit any visual bending dot defects on either the first curved glass substrate or the second curved glass substrate.

4. The method of any preceding claim, wherein the first sag depth and the second sag depth are greater than 2 mm and within 10% of one another.

5. The method of any preceding claim, wherein heating the stack comprises heating the stack to a temperature different from the first sag temperature and the second sag temperature.

6. The method of any preceding claim, wherein heating the stack comprises heating the stack to a temperature between the first sag temperature and the second sag temperature.

7. The method of any preceding claim, wherein the first sag depth or the second sag depth is in a range from about 6 mm to about 30 mm.

8. The method of any preceding claim, further comprising placing the stack on a female mold and heating the stack on the female mold.

9. The method of claim 8, wherein co-shaping the stack comprises sagging the stack using gravity through an opening in the female mold.

10. The method of claim 8 or claim 9, further comprising applying a male mold to the stack.

11. The method of claim 8 or claim 9, further comprising applying a vacuum to the stack to facilitate co-shaping the stack.

12. The method of any preceding claim, wherein the second thickness is from 4 × the first thickness or more.

13. The method of any preceding claim, wherein a difference in length between the second region and the first region is twice length of the second region.

14. A laminated glass article formed by a method of any of claims 1-13, the laminated glass article comprising an interlayer disposed between the first curved glass substrate and the second curved glass substrate.

15. The laminated glass article of claim 14, wherein the first curved glass substrate has a thickness that is in a range from 1.5 times to about 10 times a thickness of the second curved glass substrate.
